(19) Europäisches Patentamt
European Patent Office
Office européen des brevets

(11) Veröffentlichungsnummer: **0 025 973**
**B1**

(12) # EUROPÄISCHE PATENTSCHRIFT

(45) Veröffentlichungstag der Patentschrift: **23.01.85**

(51) Int. Cl.⁴: **B 01 D 13/04,** C 08 J 5/22

(21) Anmeldenummer: **80105570.8**

(22) Anmeldetag: **17.09.80**

(54) **Poröse, semipermeable, durch Amidoximgruppen modifizierte Membran auf der Basis von Polyacrylnitrilen, Verfahren zu ihrer Herstellung und ihre Verwendung.**

(30) Priorität: **19.09.79 CH 8461/79**

(43) Veröffentlichungstag der Anmeldung: **01.04.81 Patentblatt 81/13**

(45) Bekanntmachung des Hinweises auf die Patenterteilung: **23.01.85 Patentblatt 85/4**

(84) Benannte Vertragsstaaten: **BE CH DE IT LI NL SE**

(56) Entgegenhaltungen:
**NL - C - 88 955**

**CHEMICAL ABSTRACTS, Band 83, 1975, Seite 60, Nr. 11675p Columbus, Ohio, U.S.A.**
**CHEMICAL ABSTRACTS, Band 83, 1975, Seite 55, Nr. 207279g columbus, Ohio, U.S.A.**

(73) Patentinhaber: **ALIGENA AG, Postfach, CH-4001 Basel (CH)**

(72) Erfinder: **Linder, Charles, Dr., 20 Derech Yavneh, Rehovot (IL)**
Erfinder: **Perry, Mordechai, Dr., 32 Sokolov Street, Petach Tikvah (IL)**

(74) Vertreter: **Zumstein, Fritz sen., Dr. et al, Bräuhausstrasse 4, D-8000 München 2 (DE)**

**EP 0 025 973 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**Beschreibung**

Die vorliegende Erfindung betrifft verbesserte semipermeable Membranen für Diffusionsverfahren, wie z. B. für Umkehrosmoseverfahren (RO) oder Ultrafiltrationsverfahren (UF). Insbesondere betrifft die vorliegende Erfindung Membranen, die durch chemische Modifikation von Acrylnitril-Polymeren hergestellt werden und ein verbessertes Durchflußvermögen (Flux) und auch verbesserte Rückhalteeigenschaften zeigen.

RO-Membranen sind relativ dichte Membranen mit Porendurchmessern von 1 bis 15 Å, die niedermolekulare Salze, wie z. B. Natriumchlorid, wirksam zurückhalten können, und zwar zu 50%, insbesondere auch bis zu 90%. UF-Membranen haben dagegen relativ großen Porendurchmesser, und ihr Rückhaltevermögen für niedermolekulare Salze liegt unter 10%.

Da diese Definitionen allerdings eher willkürlich sind, kann es z. B. Membranen mit Porendurchmessern geben, welche ein Rückhaltevermögen für Natriumchlorid von weniger als 50% und mehr als 10% bewirken. Derartige Membranen werden als Membranen, die zwischen RO- und UF-Membranen liegen, eingeteilt.

Die erfindungsgemäßen Membranen können entweder als UF-Membranen und/oder als UF/RO-Zwischenmembranen betrachtet werden. Sie können symmetrisch oder unsymmetrisch sein. Der Porendurchmesser der Membranen beträgt vor der nachfolgend beschriebenen Modifikation in der Regel 10 bis 1000 Å, vorzugsweise 10 bis 500 Å oder 15 bis 150 Å.

Es ist bekannt, daß Acrylnitril-Copolymere geeignete Ausgangsmaterialien für die Herstellung von semipermeablen Membranen sind (GB-A-2 016 301). Ein Nachteil dieser Membranen ist allerdings, daß sie z. B. neben einem guten Durchflußvermögen (Flux) meistens ein ungenügendes Rückhaltevermögen für den gelösten (abzutrennenden) Stoff aufweisen und deshalb für viele technische Anwendungen nicht in Frage kommen.

Ein anderer Nachteil dieser Membranen ist ihre Löslichkeit in organischen Lösungsmitteln sowie ihre im allgemeinen mangelnde Stabilität unter hohen Drücken.

Aus Chemical Abstracts 83, 11675p (1976), sind ferner sogenannte Amidoximmembranen bekannt, die durch Umsetzung von Polyacrylnitrilmembranen mit Hydroxylamin erhalten werden. Sie zeigen ein verbessertes Salzrückhaltevermögen im Vergleich mit den nicht-modifizierten Membranen auf Polyacrylnitrilbasis. Auch sie zeigen gegenüber Lösungsmitteln und hohen Drücken keine zufriedenstellenden Stabilitäten.

Diese Nachteile können weitgehend bei Verwendung von chemisch modifizierten Membranen auf der Basis von Acrylnitril-Polymeren (Polyacrylnitrilen), wie sie nachfolgend beschrieben werden, überwunden werden.

Ein Gegenstand der vorliegenden Erfindung ist daher ein Verfahren zur Herstellung einer porösen, semipermeablen, durch Amidoximgruppen modifizierte Membran aus Polyacrylnitrilen oder Copolymeren aus Acrylnitril und anderen äthylenisch ungesättigten Monomeren, dadurch gekennzeichnet, daß man eine Membran verwendet, die vor der Modifikation an der Oberfläche Poren mit einem Durchmesser von 10 bis 1000 Å aufweist und daß man die Amidoximgruppen mit einer Verbindung (C) umsetzt, die mindestens eine ionisierbare Gruppe aufweist.

Ein weiterer Gegenstand der vorliegenden Erfindung ist ein Verfahren zur Herstellung einer porösen, semipermeablen, durch Amidoximgruppen modifizierten Membran aus Polyacrylnitrilen oder Copolymeren aus Acrylnitril und anderen äthylenisch ungesättigten Monomeren, dadurch gekennzeichnet, daß man

(I) Polyacrylnitrile oder Copolymere aus Acrylnitril und anderen äthylenisch ungesättigten Monomeren mit Hydroxylamin umsetzt, mit diesem Umsetzungsprodukt eine Membran gießt, die erhaltene Membran in Wasser eintaucht und sie dann mit
  - (a) einer organischen Verbindung (A) umsetzt, welche mindestens zwei reaktionsfähige Gruppen, davon mindestens eine mit den Amidoximgruppen reaktionsfähige Gruppe aufweist, wobei so verfahren wird, daß das erhaltene Umsetzungsprodukt aus der Amidoximgruppen enthaltenden Membran und der Komponente (A) mindestens noch eine reaktionsfähige Gruppe enthält, dieses
  - (b) gegebenenfalls mit mindestens einem polyfunktionellen Oligomer oder Polymer (B) und dann
  - (c) mit einer Verbindung (C) umsetzt, die mindestens eine ionisierbare Gruppe und — sofern die Komponente (B) vorhanden — mindestens eine mit der Komponente (B) reaktionsfähige Gruppe aufweist, sofern die Komponente (B) nicht bereits selbst genügend ionisierbare Gruppen enthält, oder daß man

(II) Polyacrylnitrile oder Copolymere aus Acrylnitril und anderen äthylenisch ungesättigten Monomeren mit Hydroxylamin und
  - (a) einer organischen Verbindung (A) umsetzt, welche mindestens zwei reaktionsfähige Gruppen, davon mindestens eine mit den Amidoximgruppen reaktionsfähige Gruppe aufweist, wobei so verfahren wird, daß das erhaltene Umsetzungsprodukt aus der Amidoximgruppen enthaltenden Membran und der Komponente (A) mindestens noch eine reaktionsfähige Gruppe enthält, mit diesem Umsetzungsprodukt eine Membran gießt, die erhaltene Membran

in Wasser eintaucht, sie dann

(b) gegebenenfalls mit mindestens einem polyfunktionellen Oligomer oder Polymer (B) und dann

(c) mit einer Verbindung (C) umsetzt, die mindestens eine ionisierbare Gruppe und — sofern die Komponente (B) vorhanden — mindestens eine mit der Komponente (B) reaktionsfähige Gruppen aufweist, sofern die Komponente (B) nicht bereits selbst genügend ionisierbare Gruppen aufweist.

Die Membranen haben vor der Modifikation an der Oberfläche Poren mit Durchmessern von 10 bis 1000 Å, vorzugsweise von 10 bis 500 Å.

Weitere Gegenstände der vorliegenden Erfindung sind Verfahren zur Herstellung der modifizierten Membranen, die sich als Oberflächenfilme auf porösen Trägermaterialien befinden, Verfahren, in denen man vorgebildete, Amidoximgruppen enthaltende Membranen und den Komponenten (A), gegebenenfalls (B) und schließlich (C) umsetzt, ferner poröse, semipermeable, durch Amidoximgruppen modifierte Membranen aus Polyacrylnitrilen oder Copolymeren aus Acrylnitril und anderen äthylenisch ungesättigten Monomeren, dadurch gekennzeichnet, daß sie vor der Modifikation an der Oberfläche Poren mit einem Durchmesser von 10 bis 1000 Å aufweisen und an die Amidoximgruppen über

(a) mindestens ein Brückenglied, abgeleitet von einer organischen Verbindung (A), die mindestens zwei funktionelle Gruppen aufweist,

(b) gegebenenfalls mindestens ein polyfunktionelles lineares oder verzweigtes Oligomer oder Polymer (B) gebunden sind, und

(c) das Brückenglied oder das Oligomer/Polymer (B) — sofern vorhanden — mit ionisierbaren Gruppen enthaltenden Resten substituiert ist, und schließlich auch

die Verwendung dieser Membranen auf dem Gebiet der Konzentrierung und Reinigung von Flüssigkeiten (Lösungen), z. B. die der Entsalzung von Lösungen organischer Verbindungen (Farbstoffen) oder bei der Abwasserreinigung.

Diese und andere Gegenstände der vorliegenden Erfindung werden nachfolgend weiter erläutert.

Die erfindungsgemäßen Membranen sind modifizierte Polyacrylnitril enthaltende Membranen mit solchen Porendurchmessern, daß sie z. B. durchlässig für niedermolekulare einwertige Salze sind, aber polyvalente Ionen mit relativ hohen oder auch niedrigen Molekulargewichten sowie auch einwertige Ionen mit hohem Molekulargewicht und nichtionische Verbindungen zurückhalten.

Die erfindungsgemäße Modifikation der Membranen stabilisiert diese gegen mögliche Verdichtungen unter hohen Drücken, so daß das Durchflußvermögen weniger beeinträchtigt wird und gleichzeitig natürlich höhere Arbeitsdrücke angewendet werden können.

Zusätzlich zu der verbesserten Druckstabilität wird auch die Stabilität gegen Lösungsmittel durch die erfindungsgemäße Modifikation verbessert. In beiden Fällen ist diese Verbesserung auf eine Vernetzung der Membranen zurückzuführen.

Die erfindungsgemäßen Membranen werden durch chemische Modifizierung von Amidoximgruppen enthaltenden Polyacrylnitril bzw. entsprechenden UF- oder RO/UF-Membranen hergestellt. Für diese Modifikation ist eine Reaktionsfolge verschiedener chemischer Schritte notwendig.

Während der Reaktion mit Hydroxylamin werden in den Acrylnitrilpolymeren oder Copolymeren nicht nur Amidoximgruppen gebildet, sondern es können auch weitere Gruppen gebildet werden, z. B. durch Hydrolyse oder durch Reaktion der Amidoximgruppen untereinander.

Mit diesem Verfahren ist es möglich, modifizierte, Polyacrylnitril enthaltende Membranen herzustellen, deren Porendurchmesser einen deutlich größeren Bereich umfassen, als dies bis anhin möglich war.

So können Membranen mit verschiedenen Porendurchmessern und entsprechend verschiedenen Rückhaltevermögen modifiziert werden, um ein höheres Rückhaltevermögen für eine vorgegebene Lösung zu erhalten. So können z. B. zwei verschiedene Membranen mit einem Rückhaltevermögen von 30% bzw. 80% für eine vorgegebene Lösung erfindungsgemäß so modifiziert werden, daß man in beiden Fällen ein Rückhaltevermögen von über 90% erreicht.

Dies wird dadurch erreicht, daß man das Verhältnis von geladenen Teilen zu den Nitrilgruppen der erfindungsgemäßen Membranen erhöht, indem man über ein Brückenglied ein polyfunktionelles Oligomer oder Polymer mit den Amidoximgruppen (modifizierten Nitrilgruppen) verbindet und dann das Oligomer/Polymer mit Ladungen versieht, sei dies durch die Umsetzung mit einer ionisierbaren (anionischen) Gruppen enthaltenden Verbindung oder z. B. durch Quaternierung von Aminogruppen (Bildung von kationischen Gruppen), die das Polymer bereits enthält. Die verwendete Grundmembran, die erfindungsgemäß modifiziert wird, besteht in der Regel aus Polyacrylnitril oder aus Acrylnitril-Copolymerisaten, wobei der Anteil der Acrylnitrileinheiten im Copolymer mindestens 5, vorzugsweise mindestens 20 und insbesondere mindestens 50 Gew.-% beträgt. Weitere geeignete Polymere (neben Polyacrylnitril) sind solche aus Alkyl($C_1-C_6$)-Acrylnitrilen, z. B. Methacrylnitril oder Hexylacrylnitril, Arylacrylnitril, z. B. Phenylacrylnitril, Halogenacrylnitril, worin Halogen Fluor, Chlor oder Brom ist, z. B. $\alpha$-Fluoracrylnitril oder $\alpha$-Chloracrylnitril, und Thioacrylnitrilen.

Geeignete Comonomere, die mit Acrylnitril copolymerisiert werden können, sind Monomere mit

z. B. hydrophoben, hydrophilen, polaren oder ionischen Gruppen, insbesondere z. B. Vinylester mit 2 bis 18 Kohlenstoffatomen im Säureteil, insbesondere Vinylacetat, Vinyläther mit 3 bis 12 Kohlenstoffatomen, Vinylpyridin, Vinylchlorid, Styrol, Butadien, Acryl- oder Methacrylsäure oder (Meth)acrylate, z. B. solche mit 1 bis 4 Kohlenstoffatomen im Esterteil. Ferner Maleinsäureanhydrid, 2-Aminoäthylmethacrylat und Allylverbindungen, wie z. B. Allylalkohol, Allyl- oder Methallylsulfonsäure und ihre Salze (Alkalimetallsalze), Allyl- oder Methallylhalogenide, Allylamine oder Allyl-p-Toluolsulfonate. Ebenfalls geeignet sind Terpolymere, z. B. aus Acrylnitril, Styrol und Butadien (ABS-Polymere), Acrylnitril/Vinylacetat/Methacrylat oder Acrylnitril/Methylmethacrylat/Natriumallyl-sulfonat oder Tetrapolymere auf Acrylnitrilbasis.

Die Grundmembran kann auch aus Gemischen der genannten (Co)polymeren bestehen.

Weitere Membranen, die erfindungsgemäß modifiziert werden können, sind solche, in denen mindestens einige der Nitrilgruppen der Acrylnitrileinheiten zu Carboxylgruppen hydrolysiert oder zu Aminogruppen reduziert worden sind. Ferner sind auch solche Membranen geeignet, in denen die zur Herstellung verwendeten Comonomeren (neben Acrylnitril) chemisch modifiziert sind. Die erfindungsgemäßen Membranen sollten mindestens 5% Acrylnitril enthalten, so daß die chemische Modifikation überhaupt ausgeführt werden kann. Die zur erfindungsgemäßen Modifikation benötigten Ausgangsmembranen sind kommerzielle Produkte oder sie können vom Fachmann leicht selber hergestellt werden. Entsprechende Gießlösungen und Herstellungsverfahren sind aus der technischen Literatur, insbesondere auch aus der Patentliteratur (vgl. zum Beispiel GB-A-1 327 990 und GB-A- 2 016 301) bekannt.

Die Komponente (A) bildet ein Brückenglied zwischen der modifizierten, Amidoximgruppen enthaltenden Membran und dem polyfunktionellen Oligomer oder Polymer (B).

Als Komponente (A) geeignete Verbindungen sind monomere oder polymere Verbindungen mit vernetzenden Eigenschaften, die sowohl mit der Amidoximgruppen enthaltenden Grundmembran als auch mit der Komponente (B) eine chemische Bindung eingehen können. Ihre Reaktivität verdanken diese mindestens zwei funktionelle Gruppen aufweisenden Verbindungen additionsfähigen Mehrfachbindungen, Epoxidgruppen, Aziridingruppen, Aldehydgruppen, Imidatgruppen, Isocyanat- oder Isothiocyanatgruppen, ferner Hydroxylgruppen, Anhydridgruppen, Acylhalogenidgruppen sowie N-Methylolgruppen, oder als tertiäres Amin oder vorzugsweise einem als Anion abspaltbaren Substituenten, wobei diese Gruppierungen und Substituenten auch in Kombination vorkommen können. Als addierende Mehrfachbindungen enthalten sie beispielsweise die Gruppierungen

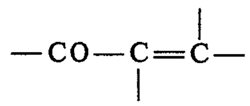 —CO—C=C— oder 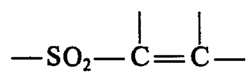

die gegebenenfalls weiter substituiert sind. Auch die Isocyanat- oder Isothiocyanatgruppe kann zu diesen Gruppen gezählt werden. Als abspaltbare Gruppen kann die Komponente (A) quaternäre Ammoniumgruppen, die als tert. Amine abgespaltet werden, wie z. B. die Trimethylammonium- oder Pyridiniumgruppe, oder auch die Sulfoniumgruppe aufweisen. Als bevorzugte reaktionsfähige Gruppe enthält die Komponente (A) jedoch Substituenten mit einem als Anion abspaltbaren Rest, vorzugsweise mit reaktiven Halogenatomen. Derartige, als Anion abspaltbare Reste verdanken ihre Reaktivität z. B. dem Einfluß elektrophiler Gruppen, wie der —CO- oder —$SO_2$-Gruppe in gesättigten, aliphatischen Resten. Sie verdanken ihre Reaktivität auch dem Einfluß eines quaternären Stickstoffatoms, wie in der Gruppe

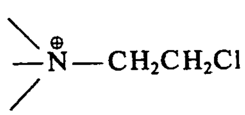

oder in aromatischen Resten dem Einfluß von in o- und p-Stellung stehenden elektrophilen Gruppen, beispielsweise Nitro, Kohlenwasserstoffsulfonyl- oder Kohlenwasserstoffcarbonylgruppen, oder aber der Bindung an ein Ringkohlenstoffatom, welches einem tertiären Ringstickstoffatom benachbart ist, wie in Halogentriazin- oder Halogenpyrimidinresten.

Als besonders vorteilhaft haben sich als Komponente (A) cyclische Kohlensäureimidhalogenide und vor allem mindestens zwei reaktive Substituenten enthaltende Halogendi- oder -triazinverbindungen erwiesen. Tetrachlorpyrimidin und vor allem Cyanurchlorid sind dabei besonders vorteilhaft.

Bei den hier als Komponente (A) verwendeten, cyclischen Kohlensäureimidhalogeniden handelt es sich vorteilhafterweise um

($A_1$) s-Triazinverbindungen mit mindestens zwei an Kohlenstoffatome gebundene, gleiche oder verschiedene Halogenatome, wie z. B. Cyanurchlorid, Cyanurfluorid, Cyanurbromid sowie um primäre Kondensationsprodukte aus Cyanurfluorid bzw. Cyanurchlorid bzw. Cyanurbromid mit z. B. Wasser, Ammoniak, Aminen, Alkanolen, Alkylmercaptanen, Phenolen oder Thiophenolen;

($A_2$) Pyrimidine mit mindestens zwei reaktionsfähigen gleichen oder verschiedenen Halogenatomen, wie 2,4,6-Trichlor-, 2,4,6-Trifluor- oder 2,4,6-Tribrompyridin, die in 5-Stellung beispielsweise durch eine Alkyl-, Alkenyl-, Phenyl-, Carboxyl-, Cyan-, Nitro-, Chlormethyl-, Chlorvinyl-, Carbalkoxy-, Carboxymethyl-, Alkylsulfonyl-, Carbonsäureamid- oder Sulfolsäureamidgruppe, vorzugsweise jedoch durch Halogen, wie z. B. Chlor, Brom oder Fluor weitersubstituiert sein können. Besonders geeignete Halogenpyrimidine sind 2,4,6-Tri-chlor- und 2,4,5,6-Tetrachlorpyrimidine;

($A_3$) Halogenpyrimidincarbonsäurehalogenide, wie z. B. Dichlorpyrimidin-5- oder -5-carbonsäurechlorid;

($A_4$) 2,3-Dihalogen-chinoxalin-, -chinazolin- oder -phthalazin-carbonsäure- oder -sulfonsäurehalogenide, wie 2,3-Dichlorchinoxalin-6-carbonsäurechlorid bzw. -6-sulfonsäurechlorid, 2,6-Dichlorchinazolin-6- oder -7-carbonsäurechlorid, 1,4-Dichlorphthalazin-6-carbonsäurechlorid oder -bromid;

($A_5$) 2-Halogen-benzo-thiazol- bzw. -oxazolcarbonsäure- oder -sulfonsäurehalogenide, wie 2-Chlorbenzothiazol- bzw. -oxazol-5- oder -6-carbonsäurechlorid bzw. -5- oder -6-sulfonsäurechlorid;

($A_6$) Halogen-6-pyridazonyl-1-alkanoylhalogenide oder -1-benzoylhalogenide, wie z. B. 4,5-Dichlor-6-pyridazonyl-1-propionylchlorid bzw. -1-benzoylchlorid.

Weitere, mindestens zwei reaktive Substituenten aufweisende Verbindungen, die als Komponente (A) eingesetzt werden können, sind beispielsweise

($A_7$) Anhydride oder Halogenide aliphatischer, $\alpha,\beta$-ungesättigter Mono- oder Dicarbonsäuren mit vorzugsweise 3 bis 5 Kohlenstoffatomen, wie Maleinsäureanhydrid, Acrylsäurechlorid, Methacrylsäurechlorid und Propionsäsurechlorid;

($A_8$) Anhydride oder Halogenide von beweglichen Halogenatomen enthaltenden, aliphatischen Mono- oder Dicarbonsäuren mit vorzugsweise 3 bis 10 Kohlenstoffatomen oder aromatischen Carbonsäuren, wie z. B. Chloracetylchlorid, $\beta$-Chlorpropionsäurechlorid, $\alpha,\beta$-Dibrompropionsäurechlorid, $\alpha$-Chlor- oder $\beta$-Chloracrylsäurechlorid, Chlormaleinsäureanhydrid, $\beta$-Chlorcrotonsäurechlorid bzw. Fluor-nitro- oder Chlor-nitrobenzoesäurehalogenide oder -sulfonsäurehalogenide, in welchen das Fluor- bzw. das Chloratom in o- und/oder p-Stellung zu der Nitrigruppe steht;

($A_9$) Carbonsäure-N-methylolamide oder reaktionsfähige, funktionelle Derivate dieser Methylolverbindungen. Als Carbonsäure-N-methylolamide kommen vor allem N-Methylolchloracetamid, N-Methylol-bromacetamid, N-Methylol-$\alpha,\beta$-dichlor- oder -dibrompropionamid, N-Methylol-acrylamid, N-methylol-$\alpha$-chlor- oder-$\alpha$-bromacrylamid in Betracht. Als reaktionsfähige Derivate der Carbonsäure-N-methylolamide kommen beispielsweise die entsprechenden N-Chlormethyl- oder N-Brommethylamide in Frage;

($A_{10}$) gegebenenfalls verätherte N-Methylolharnstoffe oder N-Methylolmelamine, wie z. B. N,N-Dimethylolharnstoff, N,N-Dimethylolharnstoff-dimethyläther, N, N'-Dimethyloläthylen- oder -propylenharnstoff, 4,5-Dihydroxy-N,N'-di-methyloläthylenharnstoff oder -dimethyläther bzw. Di- bis Hexamethylolmelamine, Trimethylolmelamin-dimethyläther, Pentamethylolmelamin-di- bis -trimethyläther, Hexamethylolmelamin-penta- oder -hexamethyläther;

($A_{11}$) Kondensationsprodukte von mindestens eine phenolische Hydroxylgruppe aufweisenden Diarylalkanen mit Halogenhydrinen, z. B. das Diepoxid aus 2,2-Bis(4'-hydroxyphenyl)-propan und Epichlorhydrin, sowie auch Glycerin-triglycidäther und ferner entsprechende Di-azaridine;

($A_{12}$) Di-aldehyde, wie z. B. Glutar- oder Adipinaldehyd;

($A_{13}$) Diisocyanate oder Diisothiocyanate, wie z. B. Alkylen($C_2-C_4$)Diisocyanate, insbesondere Äthylendiisocyanat, Phenylen- oder Alkyl($C_2-C_4$)-substituierte Phenylendiisocyanate, wie z. B. Phenylen-1,4-Diisocyanat oder Toluol-2,4-diisocyanat, ferner Phenylendiisothiocyanate, wie z. B. Phenylen-1,4-diisothiocyanat;

($A_{14}$) weitere reaktive Verbindungen, wie Trisacryloly-hexahydro-s-triazin, Epoxide oder Aziridine.

Bei der Komponente (B) (polyfunktionelle Oligomere oder Polymere) handelt es sich um Verbindungen, welche aliphatische oder aromatische Aminogruppen enthalten, wobei diese primär, sekundär oder tertiär sein können; ferner kann diese Komponente Hydroxy-oder Thiogruppen aufweisen. Beispiele solcher Polymerer sind Polyäthylenimin (M.G. 150 bis 1 000 000), teilweise alkyliert (z. B. mit Methyljodid) oder anderweitig modifiziert, Polyvinylalkohol (M.G. 2000 bis 2 000 000) oder teilweise veresterter Polyvinylalkohol, Cellulosederivate, wie Äthylcellulose, Carboxymethylcellulose, Hydroxymethylcellulose, Hydroxyäthylcellulose, ferner Polyvinylanilin (M.G. 200 bis 2 000 000), Polybenzylamine, Polyvinylamin (M.G. 1000 bis 2 000 000), Polyvinylmerkaptan, Polymere aus 2-Hydroxyäthyl- oder 2-Aminoäthylmethacrylat, Co-, Block- oder Pfropfpolymerisate aus diesen Monomeren und/oder Polymeren sowie weiteren, insbesondere ionische Gruppen ($-SO_3^{\ominus}$, $-COO^{\ominus}$, $-N^{\oplus}R_4$) enthaltenden Monomeren und/oder Polymeren. Beispiele hierfür sind die Copolymeren aus Styrolsulfonat (Natriumsalz), Vinylanilin, 2-Aminoäthylmethacrylat/Acrylsäure, Vinylanilin-Vinylbenzyltrimethylammoniumchlorid oder Vinylamin/Vinylsulfonat.

Bevorzugte Komponenten (B) sind Polyvinylalkohole, Cellulosederivate, Polyvinylamine oder Polyvinylaniline und insbesondere Polyäthylenimine sowie auch die zuvor beispielshaft genannten Copolymeren.

Von den zuvor aufgezählten Komponenten (A) und (B) wird nicht erwartet, daß jede Komponente (A) gleich gut mit jeder Komponente (B) reagieren wird (kann). Komponenten (B), die z. B. Alkylamingruppen enthalten, sind in der Regel reaktiver als solche Komponenten, die aromatische Aminogruppen oder Hydroxygruppen enthalten.

Ebenfalls werden oligomere oder polymere Isocyanate oder Isothiocyanate (B) nicht mit einer Komponente (A) mit identischen Reaktivgruppierungen reagieren. In diesem Fall wird man aus den Komponenten (A) natürlich solche aussuchen, die mit der Komponente (B) reagieren, also z. B. Komponenten mit Methylol-, Amino- oder Hydroxylgruppen, die gut mit den Isocyanaten (B) reagieren können.

Die ionisierbare Gruppen enthaltenden Reste gehören entweder bereits zu den polyfunktionellen Oligomeren oder Polymeren (B) oder werden durch die Komponente (C) eingeführt. Die ionisierbare Gruppe ist covalent an die Membran gebunden, und das Gegenion ist beweglich und austauschbar. Unter einer anionischen ionisierbaren Gruppe ist eine solche zu verstehen, bei der das Negativion an die Membran gebunden ist und das Gegenion beweglich und austauschbar ist. Bei der kationisch ionisierbaren Gruppe ist der Sachverhalt umgekehrt.

Als Reagenzien, die eine ionisierbare Gruppe und den ein Brückenglied zwischen dieser und der Membran bildenden Rest enthalten, kommen farblose und farbige Verbindungen in Betracht, z. B. ionogene reaktive Farbstoffe, die verschiedenen Klassen angehören können und z. B. Anthrachinon-, Formacyl- oder Azofarbstoffe sind. Azofarbstoffe sind bevorzugt. Sie können gegebenenfalls auch als Metallkomplexe vorliegen.

Als Reaktivgruppen, welche die Bindung der Komponente (C) an die (modifizierte) Membran ermöglichen, seien die folgenden genannt: Carbonsäurehalogenidgruppen, Sulfonsäurehalogenidgruppen, Reste von $\alpha,\beta$-ungesättigten Carbonsäuren oder Amiden, z. B. der Acryl-, Methacryl-, $\alpha$-Chloracryl- oder $\alpha$-Bromacrylsäure, Acrylamidreste, Reste vorzugsweise niedriger Halogenalkylcarbonsäuren, z. B. der Chloressigsäure, $\alpha,\beta$-Dichlorpropionsäsure oder $\alpha,\beta$-Dibrompropionsäure; Reste von Fluorcyclobutancarbonsäuren, z. B. der Tri- oder Tetrafluorcyclobutancarbonsäure; Reste mit Vinylacylgruppen, z. B. Vinylsulfongruppen oder Carboxyvinylgruppen; Reste, die Äthylsulfonyl- ($-SO_2CH_2CH_2OSO_2OH$, $-SO_2CH_2CH_2$) oder Äthylaminosulfonylgruppen ($-SO_2NHCH_2CH_2OSO_2OH$) enthalten und halogenierte heterocyclische Reste, wie z. B. Reste von Dihalogenchinoxalinen, Dihalogenpyridazonen, Dihalogenphthalazinen, Halogenbenzthiazolen oder vorzugsweise halogenierten Pyrimidinen oder 1,3,5-Triazinen, wie z. B. von Monohalogentriazinen, Dihalogentriazinen, 2,4-Dihalogenpyrimidinen oder 2,5,6-Trihalogenpyrimidinen. Geeignete Halogenatome in den vorgenannten Resten sind Fluor-, Brom- und insbesondere Chloratome.

Beispielhaft seien die folgenden reaktiven Gruppen, die sich in der Komponente (C) befinden können, aufgezählt: Monochlortriazinyl, Dichlortriazinyl, 2,4-Dichlorpyrimidyl, 2,3-Dichlorchinoxalin-6-carbonyl, 4,5-Dichlorpyridazonpropionyl, 1,4-Dichlorphthalazin-6-carbonyl, Chlorbenzthiazol, das mit einem Farbstoffmolekül über $-CONH-$, $SO_2NH-$, $-NH-Ar-N=N-$ (Ar = Phenylen oder Naphthylen), verbunden ist, 5-Chlor-4-methyl-2-methylsulfonyl-pyrimidyl, Vinylsulfonyl, $\beta$-Sulfatoäthylsulfonyl, $\beta$-Sulfatoäthylaminosulfonyl, $\beta$-Chloräthylsulfonyl oder $\beta$-Sulfatopropionamido.

Besonders bevorzugt als Komponente (C) sind reaktive Azofarbstoffe, die Sulfonsäuregruppen ($-SO_3H$) oder Carboxylgruppen ($-COOH$) enthalten, wobei diese auch in Salzform, z. B. in Form eines Alkalimetallsalzes (Natriumsalz) vorliegen können, und die als Reaktivgruppierungen Monochlortriazin-, Dichlortriazin-, 2,4-Dichlorpyrimidin-, Vinylsulfonyl-, $\beta$-Sulfatoäthylsulfonyl-, $\beta$-Chloräthylsulfonyl- oder $\beta$-Sulfatoäthylaminosulfonylreste enthalten.

Als ionisierbare Gruppen in der Komponente (C) oder in der Membran nach der Modifizierung sind die genannten Sulfatogruppen, Sulfonsäuregruppen, Carbonsäuregruppen, von primären, sekundären oder tertiären Aminogruppen und Wasserstoff gebildete Ammoniumgruppen oder quaternäre Ammonium-Phosphonium- oder Sulfoniumgruppen geeignet. Besonders günstige Ergebnisse werden mit sulfonsäuregruppenhaltigen Komponenten erzielt.

Besonders wertvoll und vielseitig sind die Membranen, in denen die Komponente (B) mit einem sulfonsäuregruppenhaltigen Azofarbstoff modifiziert ist. Der Azofarbstoff kann auch komplexgebundenes Metall, z. B. Kupfer, enthalten.

Ferner ist es auch möglich, die geladenen Gruppen durch Umsatz von Reagenzien, wie Alkyl- oder Benzylhalogeniden, mit einer Aminofunktion der Polymerkette in die Membran einzuführen. Auf diese Weise kann z. B. der Polyäthyleniminrest mit Methyljodid oder Dimethylsulfat modifiziert werden. Andererseits kann auch mit Chlorsulfonsäure selber modifiziert werden.

Der Grad der Bildung von Amidoximgruppen aus Nitrilgruppen kann im Bereich von 0,5 bis 30%, vorzugsweise im Bereich von 1 bis 4% liegen, wenn z. B. Polymermaterial verwendet wird, das 80% und mehr Acrylnitrileinheiten enthält.

## Herstellung der erfindungsgemäßen, Polyacrylnitril enthaltenden Membranen

### (1) Modifikation der Ausgangsmembran mit Hydroxylamin und Umsetzung mit den Komponenten (A), (B) und (C)

Die poröse Ausgangsmembran (aus Polyacrylnitril oder Copolymeren aus Acrylnitril und äthylenisch ungesättigten Comonomeren) wird mit einer wäßrigen Lösung von Hydroxylamin (2- bis 15%ig), die einen pH-Wert von 2 bis 11, vorzugsweise 6 bis 7 (z. B. eingestellt mit Natriumcarbonat) hat, bei Temperaturen von etwa 55 bis 75°C während 3 bis 60 Minuten behandelt. Anschließend wird die so behandelte Membran aus der Reaktionslösung entfernt und in eine wäßrige Lösung (Suspension) der (multifunktionellen) organischen Verbindung (A) gebracht, die z. B. bei der Verwendung von Cyanurchlorid als Komponente (A) 0,5 bis 5 Teile Cyanurchlorid pro einem Teil Membran enthalten kann. Die Reaktionstemperatur soll unter 4°C, z. B. bei 0°C, gehalten werden, um eine Hydrolyse des Cyanurchlorids zu vermeiden, der pH-Wert-Bereich ist etwa zwischen 8 und 11, und die Reaktionszeit kann 20 Minuten bis 5 Stunden betragen.

Die nichtumgesetzten reaktiven Gruppen der Komponente (A) werden anschließend mit einer wäßrigen Lösung eines polyfunktionellen Polymers (Oligomers) (B), z. B. Polyäthylenimin oder Polyvinylalkohol, weiter umgesetzt.

Geeignete Polyäthylenimine können z. B. Molgewichte von 150 bis zu 1 000 000 (vorzugsweise von 190 bis 50 000) haben, wobei die höhermolekularen Verbindungen (MG über 100 000) wegen ihrer hohen Viskosität schwieriger zu handhaben sind. Niedermolekulare Polyäthylenimine, z. B. Tetraäthylenpentamin (MG 189) oder solche mit einem Molgewicht von etwa 2000, sind ebenfalls geeignet.

Die wäßrigen, Polyäthylenimin enthaltenden Lösungen können 0,5- bis 40%ig (z. B. 20- oder 15%ig) sein, die Reaktionszeiten liegen zwischen 2 Minuten und 8 Stunden, der pH-Wertbereich etwa zwischen 8 und 12, und die Reaktionstemperatur kann 20 bis 40°C betragen. Beispielsweise erhält man gute Ergebnisse, wenn man eine 10%ige Lösung von Polyäthylenimin (MG 30 000) bei einem pH-Wert von 8,5 für 10 Minuten auf die Membran einwirken läßt. Tetraäthylenpentamin kann man aus 20%iger wäßriger Lösung und einem pH-Wert von 10 120 Minuten reagieren lassen.

Die Umsetzung mit der Komponente (C) dient der Einführung von positiven oder negativen Ladungen (ionischen Gruppierungen) in die Membranoberfläche und/oder die Poren und erfolgt ein- oder zweistufig.

Einstufig bedeutet, daß die die Ladungen tragende Verbindung und sogenannte Fixiermittel (z. B. Alkali) in einem Bad angewendet werden.

Im zweistufigen Verfahren hat man zunächst den Adsorptionsschritt der die Ladung tragenden Verbindung und dann in einer separaten Reaktionslösung den Fixierschritt [chemische Reaktion zwischen der Komponente (C) und der (modifizierten) Membran]. Das zweistufige Verfahren ist bevorzugt, da einerseits die Konzentration der Komponente (C) in der Adsorptionslösung niedriger gehalten werden und eine solche Lösung gegebenenfalls mehrfach verwendet werden kann und andererseits die Gesamtreaktionszeit kürzer ist als im einstufigen Verfahren.

Im zweistufigen Verfahren kann die Konzentration eines Reaktivfarbstoffes [Komponente (C)] in wäßriger Lösung etwa 0,5 bis 3% betragen; die Adsorption wird z. B. bei Temperaturen von 20 bis 35°C während 2 bis 60 Minuten durchgeführt; der pH-Wert kann 4 bis 8 betragen. Die Fixierung kann dann in einer wäßrigen, auf einen pH-Wert von 9 bis 12 eingestellten Lösung durchgeführt werden, wobei die Reaktionszeit etwa 30 Minuten betragen kann. Die Einstellung des pH-Wertes erfolgt mit beliebigen anorganischen (Natriumcarbonat) oder organischen Basen.

Die Reaktion der Komponente (A) (z. B. Cyanurchlorid) mit den reaktiven Amidoximgruppen der Membran kann leicht zu unerwünschten Vernetzungen und damit zu harten oder spröden Membranen führen.

Eine gewisse Vernetzung ist allerdings erwünscht, um z. B. die Stabilität der Membranen gegen hohe Drücke und Lösungsmittel zu verbessern. In Abänderung der Modifikation (1) ist es deshalb auch möglich, einen Teil der reaktiven Amidoximgruppen vor einer Reaktion mit der Komponente (A) zu hydrolysieren oder zu maskieren [z. B. durch Umsetzung mit monofunktionellen Verbindungen, die die Reaktion von (A) mit den Amidoximgruppen konkurrenzieren, wie z. B. mit Aminogruppen enthaltenden Verbindungen, Hydroxyl- oder Thioverbindungen oder Isocyanaten, Ammoniak, Schwefelwasserstoff, Hydrazin, Phenylisocyanat, Polyvinylalkoholen oder Polyäthyleniminen].

(2) Modifikation der Ausgangsmembran mit Hydroxylamin und Umsetzung mit den Komponenten (A) und (B)

Die Modifikation der Ausgangsmembran bis einschließlich der Reaktion mit der Komponente (A) erfolgt wie unter (1) beschrieben.

Als Komponente (B) wird ein Oligomer oder Polymer verwendet, das neben reaktiven Gruppierungen auch ionische Gruppen (positive oder negative Lösungen) trägt. Geeignet als Komponente (B) ist z. B. ein Copolymer aus Vinylanilin und Styrolsulfonat oder vorzugsweise ein Copolymer aus Vinylamin und Vinylsulfonat mit folgenden wiederkehrenden Einheiten:

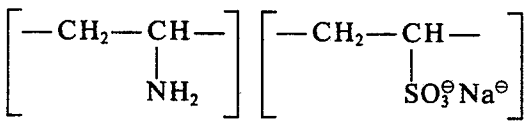

deren Verhältnis zwischen 70 : 30 und 30 : 70 variieren kann. Die Molgewichte der Copolymeren betragen etwa 5000 bis 1 000 000. Die Komponente (A) (Cyanurchlorid) kann mit der Aminogruppe reagieren.

Weitere Homo- und Copolymere können verwendet werden. Polyäthylenimin kann zur Bildung positiv geladener Membranen verwendet werden, indem man nach der Reaktion des Polyäthylenimins (als Base) die modifizierte Membran ansäuert. Die Reaktion der Komponente (B) mit den reaktiven Gruppen der Komponente (A) führt zur Vernetzung und damit zur Stabilisierung der Membran. Eine weitere mögliche Alternative betrifft die Umsetzung mit (B), wobei (B) keine ionischen Gruppen enthält.

(3) Modifikation der Ausgangsmembran mit Hydroxylamin und Umsetzung mit den Komponenten (A) und (C)

Die Reaktionsbedingungen sind die gleichen wie unter (1) angegeben; die Komponente (B) wird nicht verwendet. Die Komponente (A) ist für die Vernetzung, die Komponente (C) für die Einführung der ionischen Gruppen verantwortlich.

(4) Modifikation der Ausgangsmembran mit Hydroxylamin und Umsetzung mit der Komponente (C)

Führt man die Umsetzung der Membran mit Hydroxylamin unter Bedingungen durch, die an der Obergrenze der unter (1) angegebenen Bedingungen liegen, also z. B. bei Temperaturen von 70 bis 75° C und Verwendung einer Reaktionslösung, die 10% Hydroxylamin und 7,5% Natriumcarbonat enthält, so erhält man eine Membran mit deutlich verbesserten Rückhalteeigenschaften. Diese so erhaltene Membran kann dann direkt mit der Komponente (C) zur Einführung ionischer Gruppen umgesetzt werden.

(5) Membranen mit ebenfalls guten Durchfluß- und Rückhalteeigenschaften können auch hergestellt werden, wenn die Acrylnitril-Polymeren zuerst mit Hydroxylamin oder mit Hydroxylamin und der Komponente (A) (z. B. Cyanurchlorid) modifiziert werden und dann zu einer Membran vergossen werden, die dann mit den Komponenten (A), (B) und (C) modifiziert werden. Die Verwendung der Komponente (A) in dieser nachträglichen Modifikation ist in der Regel nur nötig, wenn sie nicht bei der Modifikation vor der Herstellung der Membran verwendet wurde.

Die zuvor beschriebenen Verfahren eignen sich zur Herstellung von sogenannten selbsttragenden Membranen als auch zur Herstellung von Membranen, die sich auf einem Träger befinden.

Zur Herstellung dieser Membranen, die sich auf einem Träger befinden, werden die Acrylnitrileinheiten enthaltenden Polymeren mit Hydroxylamin oder mit Hydroxylamin und der Komponente (A) modifiziert und dann als dünner Film auf einen porösen Träger aufgegossen. Diese so hergestellten Membranen werden dann weiter modifiziert mit den Komponenten (A) oder (B) und (C), um so die erfindungsgemäßen Membranen, die sich auf einem Träger befinden, zu erhalten.

Die sogenannten selbsttragenden Membranen, die nach der Methode (5) erhalten werden, als auch die entsprechenden Membranen, die sich auf einem Träger befinden und auch die Verfahren zu ihrer Herstellung sind weitere Gegenstände der vorliegenden Erfindung.

Die Modifikation der Polyacrylnitril-Membranen oder der Membranen aus Copolymeren von Acrylnitril und anderen äthylenisch ungesättigten Verbindungen vor dem Gießen der Membranen erfolgt durch Umsetzung mit Hydroxylamin oder mit Hydroxylamin und der Komponente (A). Diese so modifizierten Polymeren werden dann zu einer Membran vergossen, und anschließend wird diese Membran mit den Komponenten (A), (B) und (C) oder (B) und (C) weiter umgesetzt, wobei die Umsetzung mit der Komponente (C) nur durchgeführt wird, wenn die Komponente (B) nicht bereits selbst ausreichend ionische Gruppen enthält.

Das Verfahren zur Herstellung von semipermeablen Membranen, die sich auf einem Träger befinden, ist dadurch gekennzeichnet, daß man auf einer Oberfläche des porösen Trägermaterials eine organische Gießlösung aufbringt, die Polyacrylnitril oder ein Copolymer aus Acrylnitril und anderen äthylenisch ungesättigten Monomeren jeweils modifiziert mit Hydroxylamin oder mit Hydroxylamin und der Komponente (A), wobei es sich bei der Komponente (A) um eine Verbindung handelt, die mindestens zwei reaktive Gruppen enthält, wovon mindestens eine mit den Amidoximgruppen, die durch Reaktion mit den Nitrilgruppen der Membran erhalten worden sind, reaktiv ist, dann die noch feuchte Membran in Wasser behandelt und anschließend eine Modifikation durch Reaktion mit den Komponenten (A), gegebenenfalls (B), und (C) oder gegebenenfalls (B) und (C), durchführt, wobei der Reaktionsschritt zur Einführung der Komponente (C) nur durchgeführt wird, wenn die Komponente (B) nicht bereits selbst ausreichend ionische Gruppen besitzt. Die Komponenten (A), (B) und (C) haben die oben angegebenen Bedeutungen.

Die zuvor genannten Gießlösungen können auch auf Substrate aufgebracht werden, von denen sich die aufgebrachten Membranen leicht wieder entfernen lassen. Solche Substrate sind z. B. Glasplatten oder Platten aus rostfreiem Stahl, und die anschließend erhaltenen Membranen sind sogenannte

selbsttragende Membranen.

Durch die Modifikation der Acrylnitrileinheiten in den Membran bildenden Polymeren vor dem Vergießen (Herstellung) der Membranen mit Hydroxylamin oder Hydroxylamin und der Komponente (A) können verschiedene Vorteile erreicht werden:

So wird z. B. weniger Hydroxylamin und auch weniger Cyanurchlorid benötigt, wenn die genannten Modifikationsschritte bereits in der Gießlösung ausgeführt werden. So benötigt man z. B. für die Modifikation von einem $m^2$ einer vorgegebenen Membran 100 g einer Reaktionskomponente im Vergleich zu nur 6 g, wenn die Modifikation mit der gleichen Reaktionskomponente vor dem Gießen der Membran durchgeführt wird.

Die Amidoximmodifikation einer vorliegenden Membran erfordert eine sehr sorgfältige Überwachung der Reaktionstemperatur und der Reaktionszeit sowie auch die Anpassung dieser Variablen an die ursprüngliche Porosität der Ausgangsmembranen, die modifiziert werden. In den geänderten Verfahren ist es nun sehr viel leichter, den Modifikationsschritt zur Einführung der Amidoximgruppen zu überwachen, wobei dieser Reaktionsschritt unabhängig von irgendwelchen Eigenschaften der Membran ist, da diese durch die nachfolgenden Gießverfahren überwacht werden.

Der Grad der Umsetzung der Nitrilgruppen in Amidoxidgruppen, sofern diese Modifikation in der Gießlösung vorgenommen wird, liegt etwa zwischen 5 und 100%, vorzugsweise zwischen 20 und 80%. Die Konzentration der Polymerlösungen beträgt in der Regel 5 bis 50%, vorzugsweise 10 bis 25%.

Die Aufgabe des porösen Trägermaterials ist es, die mechanische Stabilität der Membranen zu verbessern. Geeignete Trägermaterialien sind in der Regel wasserunlöslich, und sie bestehen z. B. aus Polyacrylnitrilen, Polysulfonen, Polyamiden, Polyolefinen, wie z. B. Polyäthylenen oder Polypropylenen, Polyestern (non wovens) oder cellulosischen Materialien sowie gegebenenfalls auch Mischungen aus diesen angegebenen Materialien. Die Dicke des Trägermaterials kann im Bereich von etwa 20 µm bis 2 mm liegen.

Das Verfahren zur Herstellung der erfindungsgemäßen Membranen, die sich auf einem Träger befinden, umfaßt das Gießen einer organischen Lösung von Polyacrylnitril oder von einem Copolymer aus Acrylnitril und weiteren äthylenisch ungesättigten Monomeren, die durch Hydroxylamin oder Hydroxylamin und die Komponente (C) modifiziert sind, auf eine Oberfläche eines porösen Trägermaterials. Als organische Lösungsmittel kommen z. B. Dimethylformamid, N,N-Dimethylacetamid oder N-Methylpyrrolidon in Frage. Anschließend wird die Membran in Wasser von Raumtemperatur oder in Eiswasser eingetaucht, wobei gegebenenfalls zusätzliche Additive, wie z. B. oberflächenaktive Hilfsmittel oder organische Lösungsmittel, im Wasser vorhanden sein können. Die Zeit zwischen dem Vergießen der Membran und dem Eintauchen in das wäßrige Medium liegt im Bereich von 0 bis 24 Stunden. Es erfolgt während dieser Zeit keine Hitzebehandlung oder die Behandlung in einem Vakuum.

Die Gießlösung zur Herstellung der Membranen kann gegebenenfalls Zusätze enthalten, die die Porosität der Membranen beeinflussen können und auch die mechanische Stabilität verbessern können, wie z. B. Lösungsmittel oder anorganische und organische Salze.

Aus praktischen Gründen ist es erwünscht, daß die Dicke der feuchten Filmschicht etwa im Bereich von 0,05 bis 2 mm, vorzugsweise zwischen 0,1 und 0,4 mm liegt. Dünnere oder auch dickere Filme sind ebenfalls möglich.

Die so erhaltenen Membranen werden dann weiter modifiziert wie zuvor angegeben, und zwar in Abhängigkeit von den bereits durchgeführten Modifikationsschritten durch Umsetzung mit den Komponenten (A), (B) und (C).

Gegenüber bekannten modifizierten Membranen zeigen die erfindungsgemäßen bzw. erfindungsgemäß hergestellten Membranen folgende Vorteile:

1. Verbessertes Rückhaltevermögen von geladenen, insbesondere mehrfach geladenen ionogenen Substanzen einer wäßrigen Lösung.
2. Vergrößerung des Unterschiedes im Rückhaltevermögen von mehrfach geladenen und monovalenten Ionen in wäßrigen Lösungen.
3. Verbesserung des Wirkungsgrades der Trennung (Konzentrierung) von geladenen, insbesondere mehrfach geladenen Ionen von Lösungsmittel (Wasser).
4. Verbesserung des Wirkungsgrades beim Trennen von mehrfach geladenen von einfach geladenen gelösten Stoffen.
5. Verbesserung des Wirkungsgrades bei der Trennung von niedermolekularen von hochmolekularen gelösten Stoffen, wobei sowohl die nieder- wie die hochmolekularen Stoffe einwertig sind und die gleiche Ladung (positiv oder negativ) aufweisen.
6. Einsatzmöglichkeit bei pH-Werten von etwa 2 bis 10 und Temperaturen bis zu 70°C (cellulosische Membranen sind in diesen weiten Bereichen nicht anwendbar).
7. Verbesserung der Stabilität gegenüber Lösungsmittel, wobei die Membranen in den üblichen Lösungsmitteln für Polyacrylnitril, z. B. N,N-Dimethylformamid, nicht mehr löslich sind.
8. Verbesserter Widerstand gegen hohe Drücke (gute Stabilität). Druckbereich etwa zwischen 2 und 100, vorzugsweise 2 und 40 und insbesondere 2 bis 30 bar.

Insbesondere die folgenden Anwendungen sind für die erfindungsgemäßen Membranen vorteilhaft, wobei es sich im Prinzip stets um Trennungen einwertiger Ionen niedrigen Ionengewichtes von mehrwertigen Ionen mit niedrigem oder höherem Ionengewicht oder von einwertigen Ionen mit höherem Ionengewicht, um Trennungen ionogener von nichtionogenen Substanzen oder von ionogenen Verbindungen unterschiedlichen Molekulargewichtes oder entgegengesetzter Ladung handelt.

1. Die Trennung von organischen und auch metallorganischen ionogenen Substanzen von Nebenprodukten aus einer Reaktionsmischung und anderen Substanzen, welche darin enthalten sind, z. B. von Salzen, wie Natriumchlorid, Natriumsulfat oder Natriumacetat.
2. Die Trennung von Schwermetallkomplexen von solchen Salzen, welche keine Komplexe bilden (Behandlung von Abwässern).
3. Die Reinigung von Abwässern, welche bei der Produktion und Anwendung von Farbstoffen und optischen Aufhellern anfallen.
4. Die Trennung von Proteinen oder Hormonen, welche ähnliche Molekulargewichte haben, jedoch entgegengesetzt geladen sind.
5. Die Trennung von ionischen Tensiden (Detergenzien, Netzmittel oder Dispergatoren) von anderen Chemikalien, welche in der Reaktionsmischung nach der Herstellung der Tenside noch vorhanden sind (Nebenprodukte, überschüssige Ausgangsprodukte).
6. Die Entfernung von ionogenen Tensiden aus Abwässern.
7. Die Trennung von ionogenen Molekülen von Wasser, d. h., die Konzentrierung von wäßrigen Lösungen, welche Metallkomplexe, Tenside, Farbstoffe oder Proteine enthalten, wobei bessere Ergebnisse bezüglich des Wirkungsgrades (Durchfluß pro Zeiteinheit) und des Trennungseffektes im Vergleich zu bekannten Membranen erzielt werden.
8. Die Trennung von entgegengesetzt geladenen Verbindungen.
9. Die Trennung von geladenen und ungeladenen Verbindungen.

Die Membranen können, je nach Verwendungszweck, verschiedene Formen aufweisen, z. B. plattenförmig, blattförmig, röhrenförmig, in Form einer Tasche, eines Sacks, eines Konus oder als Hohlfasern vorliegen. Bei starker Druckbelastung können die Membranen natürlich durch Non-woven-Träger, Träger aus textilen Geweben oder Papier, Drahtsiebe oder Lochplatten (Module) geschützt werden. Innerhalb des weiter oben angegebenen Bereiches kann die Porengröße durch verschiedene Temperaturen variiert und ebenfalls dem jeweiligen Verwendungszweck angepaßt werden. So kann man z. B. durch Tempern der Membranen vor oder nach ihrer chemischen Modifikation die Porengröße und damit Durchfluß und das Rückhaltevermögen der Membranen verändern. Zweckmäßig beträgt die durchschnittliche Ladungsdichte (d. h., der Gehalt ionisierbarer Gruppen) der Membran 1 bis 1000 Milliäquivalente, vorzugsweise 10 bis 500 Milliäquivalente je Kilogramm trockener Membran.

Der Trenneffekt (das Rückhaltevermögen) der Membranen kann wie folgt gemessen werden: Eine kreisförmige Membran von 13 $cm^2$ Fläche wird, auf einer Sinterscheibe aus rostfreiem Stahl ruhend, in eine zylindrische Zelle aus rostfreiem Stahl eingesetzt. 150 ml der (zu prüfenden) Lösung, die die zu prüfende Substanz in der Konzentration $c_1$ (g Substanz in g Lösung) enthält, wird auf die Membran im Stahlzylinder gegeben und mit Stickstoff einem Druck von 14 bar ausgesetzt. Die Lösung wird magnetisch gerührt. Die auf der Austrittsseite der Membran anfallende Flüssigkeit wird auf ihren Gehalt (Konzentration) $c_2$ an zu prüfender Substanz untersucht, indem ab Start des Experimentes 3 Muster von je 5 ml gezogen werden. Im allgemeinen ist die Durchflußmenge durch die Membran und die Zusammensetzung der 3 Muster konstant. Hieraus läßt sich das Rückhaltevermögen als

$$R = \frac{c_1 - c_2}{c_1} \cdot 100 (\%)$$

berechnen. Als Durchflußmenge pro Flächen- und Zeiteinheit ergibt sich

$$D = V \cdot F^{-1} \cdot t^{-1}$$

V: Volumen
F: Membranfläche
t: Zeit

D ist zweckmäßig ausgedrückt in $m^3 \cdot m^{-2} \cdot d^{-1}$, d. h., Anzahl Kubikmeter je Quadratmeter Membranfläche und Tag oder in $lm^{-2}h^{-1}$, d. h., Liter pro Quadratmeter Membranfläche und Stunde.

Zusätzlich zu den Messungen an Flachmembranen werden auch Messungen mit röhrenförmigen Membranen von 60 cm Länge und einem äußeren Durchmesser von 1,4 cm durchgeführt. Diese röhrenförmigen Membranen werden dazu in eine perforierte Röhre aus rostfreiem Stahl gebracht.

Das Ganze wird in eine Röhre aus Polycarbonat gebracht. Der Ausfluß der Membrane befindet sich zwischen dieser äußeren Polycarbonatröhre und der Stahlröhre. Die Flüssigkeitszugabe erfolgt als turbulent fließender Strom der Lösung unter Druck. Die Fließgeschwindigkeit wird konstant bei etwa 10 bis 15 l pro Minute gehalten. Die Berechnung des Rückhaltevermögens und des Durchflusses

erfolgt auf die gleiche Weise wie für die Flachmembranen.

In den nachfolgenden Beispielen werden die Farbstoffe und farblosen Verbindungen der Formeln (5) bis (9) und (12) bis (18) als Komponente (C) verwendet, während Farbstoffe der Formeln (1) bis (4), (10) und (11) in Testlösungen eingesetzt werden.

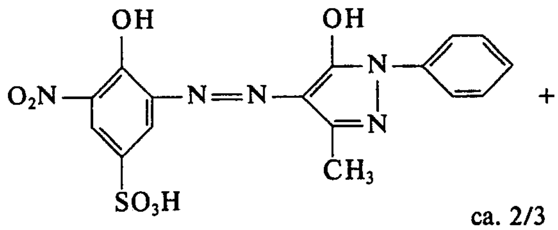

+

ca. 1/3

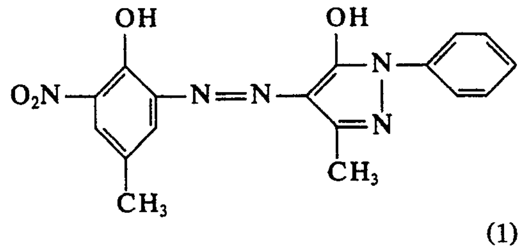

ca. 2/3

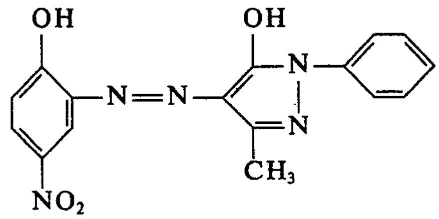

(1)

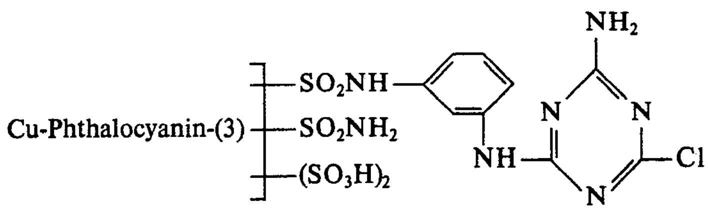

(2)

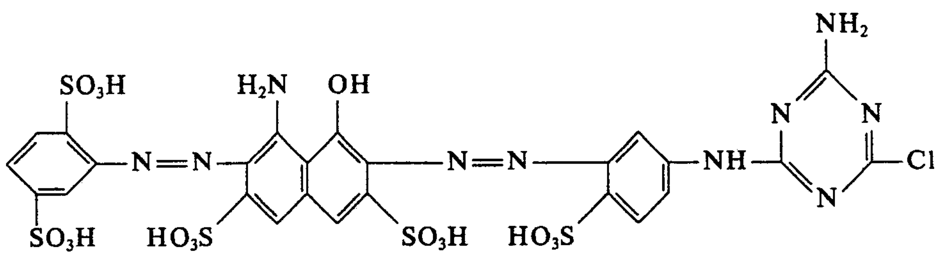

(3)

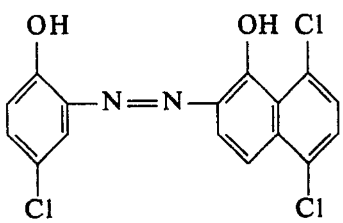

+

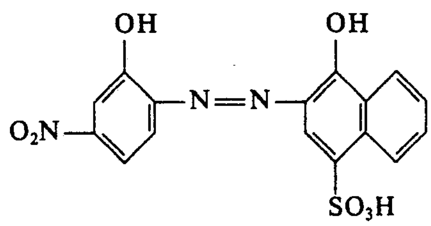

(4)

1 : 2-Cr-Komplex

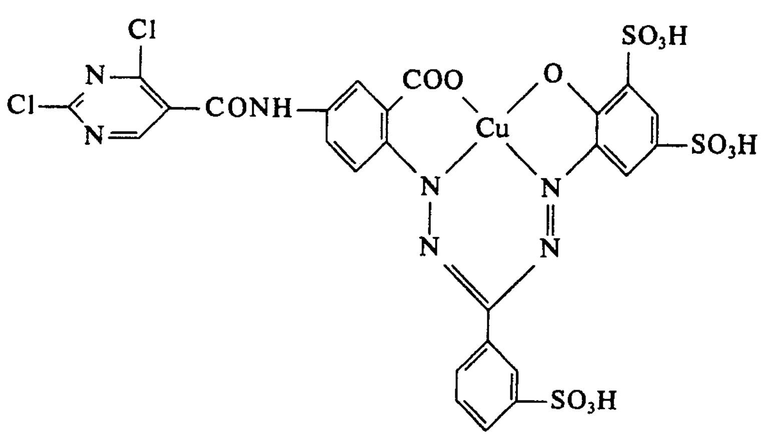

(5)

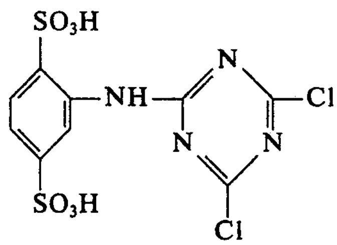

(6)

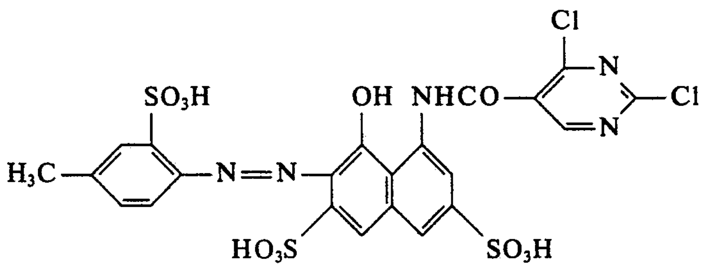

(7)

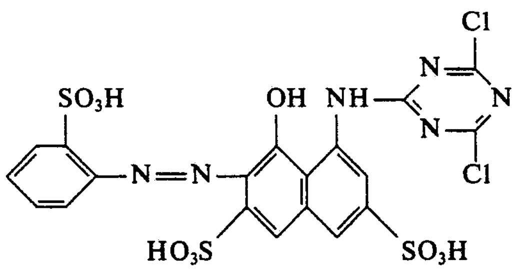

(8)

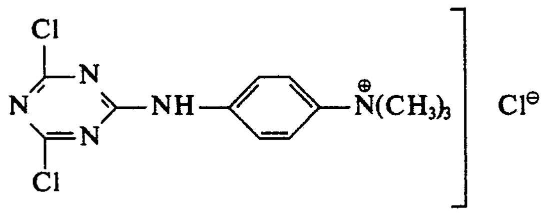

(9)

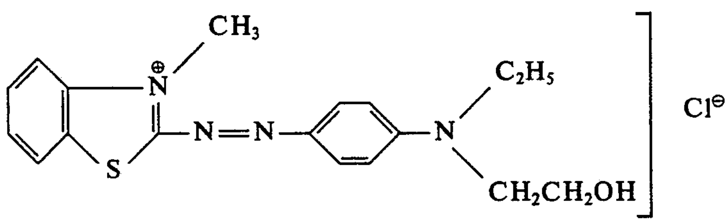

(10)

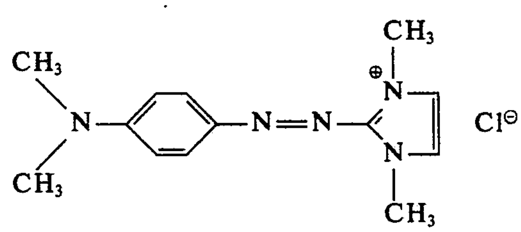

(11)

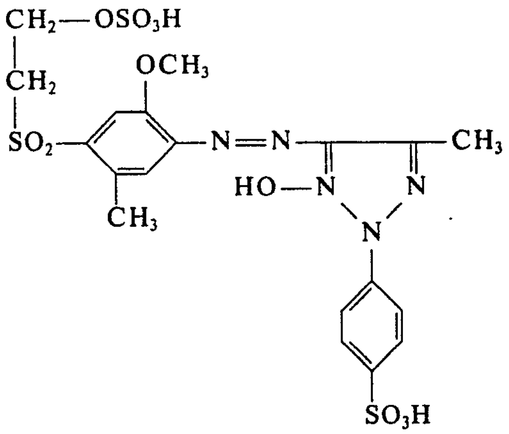

(12)

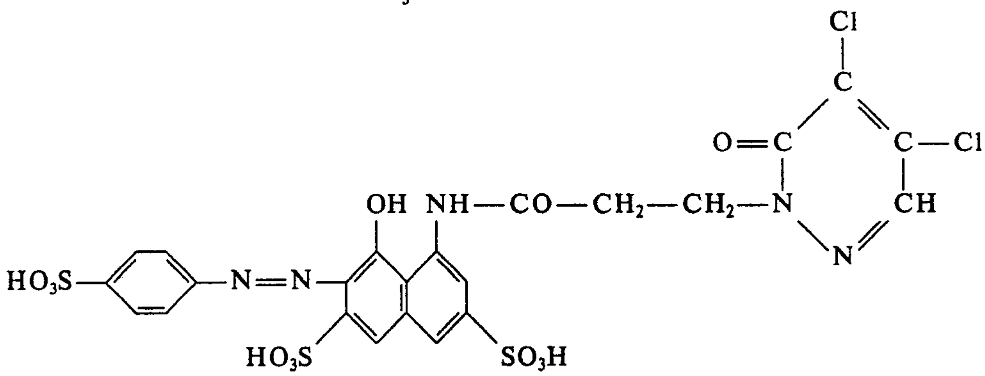

(13)

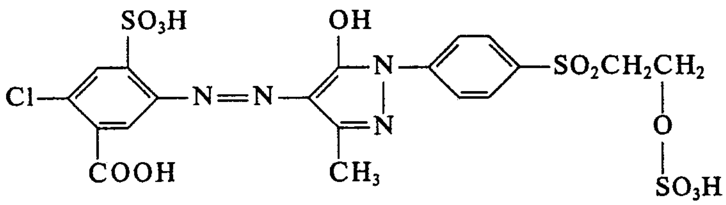

(14)

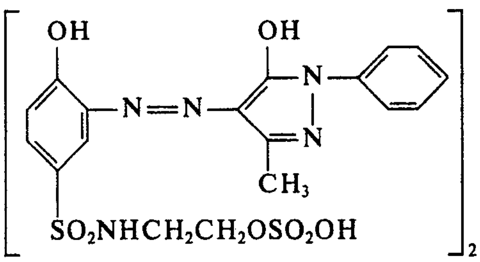

(15)

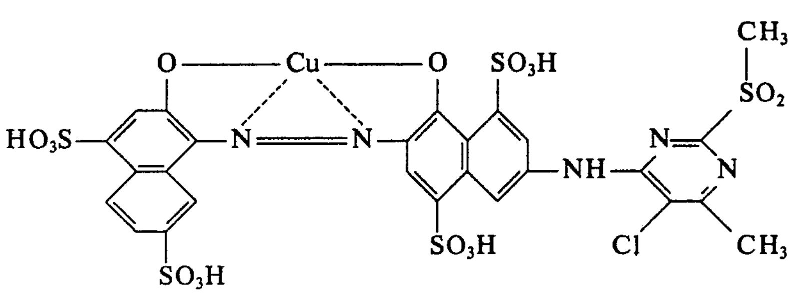

(16)

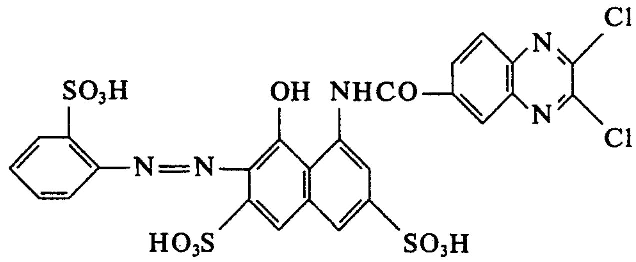

(17)

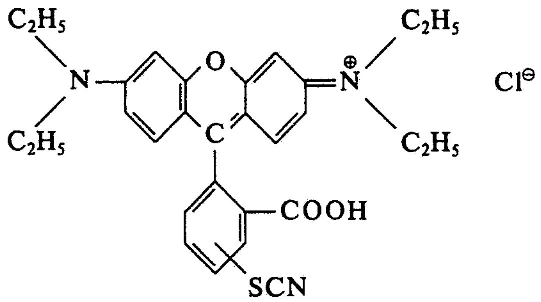

(18)

In den folgenden Beispielen beziehen sich Teile und Prozente auf das Gewicht.

Beispiel 1

Eine für die Ultrafiltration geeignete Membran mit einem maximalen Porendurchmesser von 115 Å aus einem Acrylnitril/Vinylacetat-85 : 15-Copolymerisat, welches die nachfolgenden Rückhaltevermögen aufweist:

| | |
|---|---|
| 2%ige Natriumchloridlösung | 6% |
| 1%ige Natriumsulfatlösung | 10% |
| Dextrin (Molekulargewicht 70 000) | 60% |
| 1%ige Lösung des Farbstoffes der Formel (3) | 34% |

wird während 5 Minuten bei 65°C mit einer wäßrigen Lösung, welche 10% Hydroxylamin und 7,5% Natriumcarbonat enthält und einen pH-Wert von 6,5 aufweist, behandelt. Anschließend wird die Membran aus der Lösung entfernt und in eine gerührte Lösung von 370 mg Cyanurchlorid pro 100 mg Membran gebracht. Diese Lösung wird während 30 Minuten und 0°C bei einem pH-Wert von 10 durch die Zugabe von 1 N-Natriumhydroxydlösung gehalten. Die Membran wird aus dieser Lösung entfernt, mit Eiswasser gewaschen und in eine gerührte 10%ige Lösung von Polyäthylenimin (Molekulargewicht 40 000) gebracht und dort während 5 Minuten bei Raumtemperatur und einem pH-Wert von 10 gehalten. Die Membran wird aus dieser Lösung entfernt und mit einer Lösung in Kontakt gebracht, welche 4% des Farbstoffes der Formel (5) und 10% Natriumchlorid enthält, und während 15 Minuten bei Raumtemperatur in dieser Lösung gehalten. Hierauf bringt man die Membran in eine 5%ige Lösung von Natriumcarbonat und hält sie dort während 30 Minuten bei Raumtemperatur. Nach dieser Behandlung wird der Durchfluß und das Rückhaltevermögen der Membran für verschiedene Farbstoffe, Salze und Komplexe gemessen. Die Resultate sind in den nachfolgenden Tabellen zusammengestellt.

Tabelle 1

| Verbindungen | Konzentration in % | Rückhaltevermögen in % Flachmembran | röhrenförmige Membran | Durchfluß in $l/m^2 \cdot h$ Flachmembran | röhrenförmige Membran |
|---|---|---|---|---|---|
| Farbstoff der Formel (3) | 0,1 | 99,3 | 98,6 | 62 | 65 |
| Farbstoff der Formel (3) | 2,0 | 99,6 | 99,4 | 45 | 51 |
| Farbstoff der Formel (3) | 10,0 | – | 99,1 | – | 32 |
| Farbstoff der Formel (4) | 0,3 | 98,6 | 99,5 | 42 | 51 |
| Farbstoff der Formel (4) | 6,0 | 99 | 99,5 | 30 | 40 |
| Farbstoff der Formel (4) | 15,0 | – | 99,8 | – | 24 |
| Natriumchlorid | 2,0 | 16 | 17 | 85 | 80 |
| Natriumsulfat | 0,8 | 73 | 62 | 59 | 64 |
| Natriumdodecylsulfat | 0,05 | 80 | 84 | 63 | 61 |
| Quecksilberkomplex von Äthylendiamintetraessigsäure (berechnet als Hg) | 0,01 | 99,0 | – | 50 | – |
| Farbstoff der Formel (1) | 0,5 | 99,6 | – | 45 | – |

Beim Betrieb der Membranen während 100 Stunden sinkt der Durchfluß für die 0,1%ige Lösung des Farbstoffes der Formel (3) von 62 $l/m^2 \cdot h$ auf 54 $l/m^2 \cdot h$. Bei einer gewöhnlichen Polyacrylnitrilmembran sinkt der Durchfluß von 100 auf 40 $l/m^2 \cdot h$ bei einem Betrieb von 100 Stunden. Das Rückhaltevermögen der erfindungsgemäßen Membran ändert sich beim während 100 Stunden nur wenig. In der nachfolgenden Tabelle wird dies anhand einer 1,5%igen Lösung des Farbstoffes der Formel (3) bei verschiedenen pH-Werten deutlich veranschaulicht.

Tabelle 2

| pH-Wert | Rückhaltevermögen (%) zu Beginn | nach 100 Stunden |
|---|---|---|
| 3,0 | 98,6 | 99,0 |
| 7,0 | 99,6 | 99,8 |
| 10,0 | 99,5 | 99,4 |

Ein ähnliches Verhalten zeigen auch die in den nachfolgenden Beispielen offenbarten Membranen.

## Beispiel 2

Man verfährt bei der Herstellung der Membran gleich wie in Beispiel 1 mit der Ausnahme, daß man während 2 Stunden mit einer 20%igen Lösung eines Polyäthylenimins mit einem Molekulargewicht von 189 anstelle eines Polyäthylenimins mit einem Molekulargewicht von 40 000 (während 5 Minuten) behandelt. Das Ergebnis der Prüfung ist aus der nachfolgenden Tabelle 3 ersichtlich.

Tabelle 3

| Verbindungen | Konzentration in % | Rückhaltevermögen in % Flachmembran | röhrenförmige Membran | Durchfluß in $l/m^2 \cdot h$ Flachmembran | röhrenförmige Membran |
|---|---|---|---|---|---|
| Farbstoff der Formel (1) | 5,0 | 94 | 98 | 45 | 50 |
| Farbstoff der Formel (1) | 1,0 | 98 | 97,5 | 50 | 56 |
| Farbstoff der Formel (2) | 1,0 | 97 | 97 | 60 | 61 |
| NaCl | 2,0 | 7,0 | 6,0 | 50 | 60 |
| $Na_2SO_4$ | 1,0 | 50 | 54 | 55 | 49 |
| KCl | 1,5 | 8,0 | 9,0 | 50 | 60 |

Die Ladung mit ionogenen Gruppen hat einen großen Einfluß auf das Rückhaltevermögen der Membranen. Während die Membran gemäß diesem Beispiel gegenüber einer 8%igen Lösung des Farbstoffes der Formel (3) ein Rückhaltevermögen von 98% aufweist, sinkt dieses bei der entsprechenden ungeladenen Membran (nicht mit Reaktivfarbstoff umgesetzt) auf 89%.

Beispiel 3

Man verfährt wie in Beispiel 1 angegeben mit der Ausnahme, daß man ein Polyäthylenimin mit einem Molekulargewicht von 2000 verwendet und mit einer 10%igen Lösung dieses Polyäthylenimins während 20 Minuten bei Raumtemperatur behandelt. Die Eigenschaften dieser Membran sind in der nachfolgenden Tabelle 4 angegeben.

Tabelle 4

| Verbindungen | Konzentration in % | Rückhaltevermögen in % Flachmembran | röhrenförmige Membran | Durchfluß in $l/m^2 \cdot h$ Flachmembran | röhrenförmige Membran |
|---|---|---|---|---|---|
| Farbstoff der Formel (1) | 5,0 | 99,1 | 99,8 | 40 | 45 |
| Farbstoff der Formel (3) | 1,0 | 99,9 | 98,2 | 60 | 62 |
| Farbstoff der Formel (4) | 1,0 | 97,9 | 99,5 | 54 | 58 |
| NaCl | 2,0 | 12 | — | 80 | — |
| $Na_2SO_4$ | 1,0 | 65 | — | 69 | — |
| Co-Citrat | 0,02 | 97 | — | 85 | — |

Beispiel 4

Man verfährt wie in Beispiel 2 angegeben mit der Ausnahme, daß man anstelle des Polyäthylenimins einen Polyvinylalkohol mit einem Molekulargewicht von 14 000 verwendet. Die Wirkungen einer derartigen Flachmembran sind in der nachfolgenden Tabelle 5 angegeben.

Tabelle 5

| Verbindungen | Konzentration in % | Rückhaltevermögen in % | Durchfluß $l/m^2 \cdot h$ |
|---|---|---|---|
| Farbstoff der Formel (3) | 1,5 | 97 | 32 |
| Farbstoff der Formel (4) | 1,5 | 98 | 36 |
| Natriumchlorid | 2,0 | 8,0 | 45 |
| Natriumsulfat | 1,0 | 52 | 40 |

Beispiel 5

Man verfährt wie in Beispiel 1 angegeben, verwendet jedoch einen Polyvinylalkohol mit einem Molekulargewicht von 150 000 in einer 2,5%igen Lösung. Das Rückhaltevermögen einer 1,5%igen Lösung des Farbstoffes der Formel (3) beträgt 96% und der Durchfluß 55 $l/m^2 \cdot h$.

Beispiel 6

Man verfährt wie in Beispiel 1 angegeben mit der Ausnahme, daß man anstelle des Polyäthylenimins eine 5%ige (0,5- bis 20%ige) Lösung von Polyvinylanilin mit einem Molekulargewicht von 25 000 und einem pH-Wert von 2,0 (1 bis 3) verwendet. Die Behandlung mit dem Polyvinylanilin dauert 5 Minuten. Anschließend läßt man die Membran 5 Minuten trocknen und wäscht sie sodann während 10 Minuten in einem Bad, das einen pH-Wert von 10 aufweist. Das anschließende Beladen mit ionogenen Gruppen erfolgt wie in Beispiel 1 angegeben (pH-Wert: 8 bis 12, Adsorptionszeit: 20 Minuten bis 3 Stunden). Die Eigenschaften der Flachmembranen sind in der nachfolgenden Tabelle 6 angegeben.

Tabelle 6

| Verbindungen | Konzentration in % | Rückhaltevermögen in % | Durchfluß $l/m^2 \cdot h$ |
|---|---|---|---|
| Farbstoff der Formel (3) | 1,5 | 98 | 30 |
| Farbstoff der Formel (4) | 1,5 | 99 | 35 |
| Natriumchlorid | 2,0 | 12 | 40 |

Beispiel 7

Eine Membran wird gleich wie in Beispiel 1 angegeben hergestellt, mit der Ausnahme, daß der reaktive Farbstoff der Formel (5) durch denjenigen der Formel (7) ersetzt wird und daß die Membran nur während 5 statt während 15 Minuten in der Farbstofflösung gehalten wird, bevor sie während 30 Minuten in eine Natriumcarbonatlösung getaucht wird. Die Eigenschaften einer Flachmembran werden in der nachfolgenden Tabelle 7 angegeben.

Tabelle 7

| Verbindungen | Konzentration in % | Rückhaltevermögen in % | Durchfluß $l/m^2 \cdot h$ |
|---|---|---|---|
| Farbstoff der Formel (1) | 2,0 | 99,9 | 41 |
| Farbstoff der Formel (3) | 2,0 | 99,4 | 33 |
| Natriumchlorid | 2,0 | 9,0 | 60 |

Beispiel 8

Eine Membran wird gleich wie in Beispiel 1 angegeben hergestellt, mit der Ausnahme, daß anstelle des Reaktivfarbstoffes der Formel (8) ein Reaktivfarbstoff der Formel (5) verwendet wird. Die Eigenschaften für eine Flachmembran sind in der nachfolgenden Tabelle 8 angegeben.

Tabelle 8

| Verbindungen | Konzentration in % | Rückhaltevermögen in % | Durchfluß $l/m^2 \cdot h$ |
|---|---|---|---|
| Farbstoff der Formel (3) | 1,5 | 98,9 | 40 |
| Natriumchlorid | 2,0 | 11,0 | 49 |

Beispiel 9

Eine Membran wird gleich wie in Beispiel 1 angegeben hergestellt, der Reaktivfarbstoff der Formel (5) wird jedoch durch die negativ geladene Verbindung der Formel (6) ersetzt. Die Eigenschaften der Membran sind in der nachfolgenden Tabelle 9 angegeben.

Tabelle 9

| Verbindungen | Konzentration in % | Rückhaltevermögen in % | Durchfluß $l/m^2 \cdot h$ |
|---|---|---|---|
| Farbstoff der Formel (1) | 2,0 | 99,9 | 41 |
| Farbstoff der Formel (3) | 2,0 | 99,4 | 33 |
| Natriumchlorid | 2,0 | 9 | 55 |

Beispiel 10

Zur Herstellung der Membran verfährt man gleich wie in Beispiel 1 angegeben, mit der Ausnahme, daß der Reaktivfarbstoff der Formel (5), welcher eine negativ geladene Sulfogruppe enthält, durch die positiv geladene, reaktive Verbindung der Formel (9) ersetzt wird. Diese permanent positiv, mit einem quaternären Ammoniumrest geladene Membran wird nun mit einem positiv geladenen Farbstoff geprüft und mit einer unmodifizierten Membran verglichen. Die Ergebnisse sind in der nachfolgenden Tabelle 10 für Flachmembranen zusammengestellt.

Tabelle 10

| Verbindungen | Konzentration in % | Rückhaltevermögen in % modifiziert | unmodifiziert | Durchfluß $l/m^2 \cdot h$ modifiziert | unmodifiziert |
|---|---|---|---|---|---|
| Farbstoff der Formel (10) | 1,5 | 99,2 | 50,0 | 72 | 130 |
| Natriumchlorid | 2,0 | 23 | 1,2 | 90 | 340 |
| Kalziumchlorid | 1,0 | 93 | 40 | 81 | 120 |

Beispiel 11

Eine Membran wird gleich modifiziert wie in Beispiel 2 angegeben, mit der Ausnahme, daß man nach der Umsetzung mit Polyäthylenimin (Molekulargewicht 189) die Membran während 1 Stunde in eine Lösung von Natriumcarbonat eintaucht, um den pH-Wert auf 10,0 zu bringen. Anschließend legt man die Membran für 2 (1 bis 4) Stunden in eine Petrolätherlösung bei 30 (20 bis 40) °C, welche 2% Methyljodid und 2% Natriumcarbonat (suspendiert) enthält und erreicht so eine Quaternierung der Aminogruppen des Polyäthyleniminrestes. Die so erhaltene Membran zeigt einen Durchfluß und ein Rückhaltevermögen gegen den Farbstoff der Formel (10) (2%ige Lösung) von 32 $l/m^2 \cdot h$ und 99,8%.

Beispiel 12

Eine Membran wird gleich wie in Beispiel 2 beschrieben hergestellt. Man verwendet jedoch nicht Polyäthylenimin, sondern eine 10%ige (1- bis 20%ige) wäßrige Lösung des Natriumsalzes eines Copolymerisats von Styrolsulfonsäure und Vinylanilin im Molverhältnis 70 : 30 (Molekulargewicht 10 000). Da die Membran nun bereits negativ geladene Sulfonsäuregruppen aufweist, ist ein weiteres Umsetzen mit ionisierbare Gruppen enthaltenden Verbindungen nicht mehr nötig.

Es ergibt sich ein Durchfluß und ein Rückhaltevermögen für den Farbstoff der Formel (3) (6%ige Lösung) von 40 $l/m^2 \cdot h$ und 94%.

Beispiel 13

Man verfährt wie in Beispiel 1 angegeben, verwendet jedoch Tetrachlorpyrimidin anstelle von Cyanurchlorid, wobei jedoch auch folgende chemische Reaktionsbedingungen von Vorteil sind: Die Reaktion des Tetrachlorpyrimidin mit den Amidoximgruppen kann bei 10 bis 25°C durchgeführt werden, die nachfolgende Reaktion mit dem Polymer bei Temperaturen von 35 bis 60°C. Die Eigenschaften einer solchen Membran (Reaktion mit Tetrachlorpyrimidin bei 25°C und dem Polymer bei 40°C) sind in der nachfolgenden Tabelle 11 zusammengestellt.

Tabelle 11

| Verbindungen | Konzentration in % | Rückhaltevermögen in % | Durchfluß $l/m^2 \cdot h$ |
|---|---|---|---|
| Farbstoff der Formel (3) | 0,5 | 96,6 | 76 |
| Natriumchlorid | 2,0 | 18 | 91,0 |

Durch Behandlung der so erhaltenen Membran während 1000 Stunden in einer wäßrigen Lösung mit einem pH-Wert von 10 erhöht sich das Rückhaltevermögen auf 99,2%, und der Durchfluß beträgt 85 $l/m^2 \cdot h$.

Beispiel 14

Man verfährt wie in Beispiel 1 angegeben, mit der Ausnahme, daß man anstelle von Cyanurchlorid während 1 ($^1/_2$ bis 2 Stunden) Stunde mit einer 10%igen (1- bis 15%igen) Lösung von Glutaraldehyd bei 20°C (20 bis 35°C) und einem pH-Wert von 6 (5,0 bis 7,5) behandelt. Die resultierende Membran zeigt ein Rückhaltevermögen und einen Durchfluß für eine 2%ige Lösung des Farbstoffes der Formel (3) von 98% und 64 $l/m^2 \cdot h$, und für eine 2%ige Natriumchloridlösung betragen die entsprechenden Werte 13% und 92 $l/m^2 \cdot h$.

Beispiel 15

a) Eine Polyacrylnitrilmembran gemäß Beispiel 1 wird mit Hydroxylamin (wäßrige Lösung, die 10% $NH_2OH$ und 7,5% Natriumcarbonat enthält) 7 bis 8 Minuten bei 71 bis 72°C (oder 8 Minuten bei 73 bis 74°C oder 12 Minuten bei 70 bis 71°C) behandelt. Anschließend setzt man direkt mit dem Farbstoff der Formel (5) um (wie in Beispiel 1 angegeben). Die erhaltene Membran ist elastischer als die Ausgangsmembran. Die Werte für den Durchfluß und das Rückhaltevermögen der so erhaltenen Membran sind in der nachfolgenden Tabelle 12 angegeben.

Tabelle 12

| Verbindungen | Konzentration in % | Rückhaltevermögen in % | Durchfluß $l/m^2 \cdot h$ |
|---|---|---|---|
| Farbstoff der Formel (3) | 10 | 99,8 | 15 |
| Farbstoff der Formel (1) | 19 | 99,9 | 20 |
| Natriumchlorid | 2 | 8,0 | 43 |
| Natriumsulfat | 1 | 71,0 | 26 |
| 4-Nitrotoluol-2-sulfonsäure | 2 | 87 | 80 |

b) Man verfährt wie in a), verwendet jedoch den Farbstoff der Formel (18) anstelle des Farbstoffes der Formel (5). Die erhaltene Membran zeigt einen Durchfluß und ein Rückhaltevermögen für eine 10%ige Lösung des Farbstoffes der Formel (3) von 25 $l/m^2 \cdot h$ und 99,5%.

Beispiel 16

Man verfährt nach Beispiel 15, setzt jedoch nach der Reaktion mit dem Hydroxylamin mit 50 g (10 bis 100 g) Cyanurchlorid pro 100 g der Membran bei 0°C während 15 Minuten um. Man erhält eine Membran mit verbesserter Steifheit und größerer Stabilität gegen höhere Drücke. Das Rückhaltevermögen und der Durchfluß für eine 10%ige Lösung des Farbstoffes der Formel (3) betragen 98% bzw. 18 $l/m^2 \cdot h$.

Beispiel 17

Eine UF-Membran (Porengröße von 78 Å) aus einem Acrylnitril-Styrol(80/20)-Copolymer mit einem Rückhaltevermögen für Natriumchlorid von 12%, für Natriumsulfat von 34% und für den Farbstoff der Formel (3) für 50% wird gemäß Beispiel 2 modifiziert. Die Werte für den Durchfluß und das Rückhaltevermögen der so erhaltenen Membran sind in der nachfolgenden Tabelle 13 angegeben.

Tabelle 13

| Verbindungen | Konzentration in % | Rückhaltevermögen in % | Durchfluß $l/m^2 \cdot h$ |
|---|---|---|---|
| Farbstoff der Formel (3) | 1,5 | 98,6 | 28 |
| Natriumchlorid | 2,0 | 18,0 | 41 |
| Natriumsulfat | 0,5 | 56,0 | 35 |

Beispiel 18

Eine röhrenförmige Membran gemäß Beispiel 15 wird mit dem Farbstoff der Formel (11) bei einem Druck von 25 bar getestet. Man erhält bei einer Konzentration der Farbstofflösung von 19% ein Rückhaltevermögen von 98% bei einem Durchfluß von 17 $l/m^2 \cdot h$ und bei einer Konzentration der Farbstofflösung von 32% ein Rückhaltevermögen von 99,0% bei einem Durchfluß von 14 $l/m^2 \cdot h$.

Dieses Beispiel zeigt, daß man mit einer negativ geladenen Membran auch positiv geladene Verbindungen [Farbstoff der Formel (11)] zurückhalten kann. Der Farbstoff der Formel (11) hat ein Molekulargewicht von 306 und kann von der Membran gemäß Beispiel 15a) zu mehr als 98% zurückgehalten werden und somit z. B. von Natriumchlorid abgetrennt (entsalzt) werden.

Beispiel 19

Eine Membran aus Acrylnitril/Natriummethallylsulfonat (88/12) mit einer Porengröße von 60 Å zeigt für den Farbstoff der Formel (3) (0,5%ige Lösung) ein Rückhaltevermögen von 65% und einen Durchfluß von 251 $l/m^2 \cdot h$. Unterwirft man diese Membran einer chemischen Modifikation gemäß Beispiel 1, so beträgt das Rückhaltevermögen für den gleichen Farbstoff 99,9% und der Durchfluß 100 $l/m^2 \cdot h$.

Beispiel 20

a) 15 g eines Acrylnitril/Vinylacetat(97 : 3)-Copolymers werden in Dimethylformamid gelöst, durch ein Papierfilter filtriert, entgast und auf ein blattförmiges Polyester-Non-wovens-Material gegossen (Schichtdicke in feuchtem Zustand: 0,2 mm). Unmittelbar nach dem Vergießen wird der Träger mit dem noch feuchten Film in Wasser von Raumtemperatur gegeben, wodurch eine wasserlösliche Membran (geeignet für die Ultrafiltration) entsteht, die fest mit dem Trägermaterial verankert ist.

Durchfluß und Rückhaltevermögen dieser Membran für den Farbstoff der Formel (3) (1500 ppm) sind 231 $l/m^2 \cdot h$ bzw. 74,3% bei einem Druck von 10 bar. Unterwirft man diese Membran einer Modifikation gemäß Beispiel 1 (ausgenommen, daß die Reaktion mit Polyäthylenimin 10 Minuten anstelle von 5 Minuten dauert), so sind die Durchfluß- und Rückhalteeigenschaften unter gleichen Bedingungen gegenüber der gleichen Farbstofflösung 60 $l/m^2 \cdot h$ und 98%.

b) Man verfährt wie in a), verwendet jedoch den Farbstoff der Formel (5). Die Werte für den Durchfluß und das Rückhaltevermögen für eine Lösung des Farbstoffes der Formel (3) (1500 ppm) betragen 60 $l/m^2 \cdot h$ und 97,4% bei einem Druck von 10 bar.

c) Man verfährt wie in a), verwendet jedoch den Farbstoff der Formel (13) anstelle des Farbstoffes der Formel (5). Die Werte für den Durchfluß und das Rückhaltevermögen für eine Lösung des Farbstoffes der Formel (3) (1500 ppm) betragen 12,4 $l/m^2 \cdot h$ und 98,0% bei einem Druck von 10 bar.

d) Man verfährt wie in a), verwendet jedoch den Farbstoff der Formel (18) anstelle des Farbstoffes der Formel (5). Die Reaktion mit dem Farbstoff wird mit einer 2%igen wäßrigen Lösung für 10 Minuten bei einem pH-Wert von 9 durchgeführt.

Die Werte für den Durchfluß und das Rückhaltevermögen für eine Lösung des Farbstoffes der Formel (3) (1500 ppm) betragen 34 $l/m^2 \cdot h$ und 98% bei einem Druck von 10 bar.

e) Man verfährt wie in a), verwendet jedoch den Farbstoff der Formel (17) anstelle des Farbstoffes der Formel (5). Die Werte für den Durchfluß und das Rückhaltevermögen für eine Lösung des Farbstoffes der Formel (3) (1500 ppm) sind 50 $l/m^2 \cdot h$ und 98,5% bei einem Druck von 10 bar.

f) Man verfährt wie in a), verwendet jedoch den Farbstoff der Formel (16) anstelle des Farbstoffes der Formel (5). Die Werte für den Durchfluß und das Rückhaltevermögen für eine Lösung des Farbstoffes der Formel (3) (1500 ppm) sind 25 $l/m^2 \cdot h$ und 99,2% bei einem Druck von 10 bar.

## Beispiel 21

Beispiel 20a) wird wiederholt, wobei man jedoch als Copolymer ein Acrylnitril/Methallylsulfonat (Natriumsalz) (90 : 10)-Copolymer, gelöst in N-Methylpyrrolidon, verwendet.

Diese Membran zeigt vor einer Modifikation wie in Beispiel 20a) einen Durchfluß und ein Rückhaltevermögen für eine Lösung des Farbstoffes der Formel (3) (1500 ppm) von 57,1 $l/m^2 \cdot h$ und 33,8% bei einem Druck von 10 bar; nach der Modifikation sind die entsprechenden Werte: 51,8 $l/m^2 \cdot h$ und 99,7%.

## Beispiel 22

Beispiel 20a) wird wiederholt, wobei die Modifikation mit 2,4,6-Trifluor-5-Chlorpyrimidin anstelle von Tetrachlorpyrimidin (vgl. Beispiel 13) durchgeführt wird. Die Umsetzung der Membran mit dem Fluorpyrimidin erfolgt bei 10° C während 10 Minuten, die anschließende Reaktion mit dem Polymer bei 35 C während 15 Minuten.

Die so modifizierte Membran zeigt einen Durchfluß und ein Rückhaltevermögen für eine Lösung des Farbstoffes der Formel (3) (1500 ppm) von 40 $l/m^2 \cdot h$ bzw. 98%.

## Beispiel 23

a) 9,0 g eines Acrylnitril/Vinylacetat(92 : 8)-Copolymers werden in 51 g Dimethylformamid gelöst. Die Lösung wird auf 75°C erhitzt und dann mit 3,6 g Hydroxylamin-Hydrochlorid ($NH_2OH \cdot HCl$) und 2,5 g Natriumcarbonat versetzt. Die Lösung wird dann 3 Stunden bei 75 C gehalten.

Die Lösung wird dann auf Raumtemperatur abgekühlt und filtriert, um ungelöstes Natriumcarbonat zu entfernen. Die resultierende Gießlösung wird stehengelassen, um die Luftblasen zu entfernen. Sie wird dann auf ein Polyester-Non-wovens-Trägermaterial (das an den Enden mit Klebeband auf eine Unterlage festgeklebt ist) aufgegossen und dann mit einem Stab verteilt, so daß man einen Film mit einer Dicke (im feuchten Zustand) von 0,2 mm erhält.

Der noch feuchte Film wird in deionisiertes Wasser von Raumtemperatur eingetaucht, und man erhält so eine Membran für die Ultrafiltration, die fest mit dem Träger verbunden ist. Durchfluß und Rückhaltevermögen für diese Membran sind in der nachfolgenden Tabelle 14 angegeben (Flachmembran, vor der Modifikation).

Diese Membran wird dann wie folgt modifiziert: Eintauchen in eine 2%ige Lösung von Cyanurchlorid bei 0° C, einem pH-Wert von 9 bis 10 während einer halben Stunde; Waschen der Membran in kaltem Wasser während einer halben Stunde; Eintauchen der Membran in eine 10%ige Lösung von Polyäthylenimin (M.G. 30 000) bei einem pH-Wert von 8,5 während 10 Minuten; Waschen der Membran in Wasser während einer Stunde; Eintauchen der Membran in eine Lösung, die 1% des Farbstoffes der Formel (8) und 10% Natriumchlorid enthält, bei Raumtemperatur während 15 Minuten. Die Membran wird dann aus dieser Lösung entfernt und für 30 Minuten in einer Natriumcarbonat(2%)-Lösung bei Raumtemperatur behandelt, ehe sie erneut mit Wasser gewaschen wird, um das Natriumcarbonat zu entfernen. Die Durchfluß- und Rückhalteeigenschaften dieser Membran sind in Tabelle 14 angegeben (Flachmembran, nach der Modifikation). Der Arbeitsdruck beträgt 10 bar.

b) Ebenfalls gute Resultate erzielt man, wenn man als Ausgangsmaterial ein Acrylnitril/Acrylsäure(90/10)-Copolymer verwendet, ansonsten aber wie in a) angegeben verfährt.

c) Man verfährt wie in a), verwendet jedoch N-Methylpyrrolidon anstelle von Dimethylformamid als Lösungsmittel in der Gießlösung.

d) Man verfährt wie in a), gießt jedoch die Membran auf eine Glasplatte und nicht auf einen porösen Träger.

Die Werte für Membranen b) bis d) sind ebenfalls in Tabelle 14 angegeben.

e) Man verfährt wie in c), verwendet jedoch eine 10%ige Lösung von Hexamethylolmelamin (pH 8 bis 10) anstelle von Cyanurchlorid. Die Herstellung von Hexamethylolmelamin wird z. B. in der US-PS 2 328 592 beschrieben. Durchfluß und Rückhaltevermögen der Membran für eine Lösung des Farbstoffes der Formel (3) (1500 ppm) betragen vor der Modifikation 65 $l/m^2 \cdot h$ und 42% sowie 60 $l/m^2 \cdot h$ und 94% nach der Modifikation.

f) Man verfährt wie in c), verwendet jedoch eine 10%ige Lösung von Phenylen-1,4-diisothiocyanat anstelle der wäßrigen Cyanurchlorid-Suspension. Die Reaktionszeit beträgt ferner nur 5 Minuten anstelle von 30 Minuten. Die Umsetzung mit Polyäthylenimin (M.G. 30 000) erfolgt mit einer 20%igen (anstelle der 10%igen) Lösung während einer Stunde (anstelle von 10 Minuten).

Die so modifizierte Membran ist unlöslich in N,N-Dimethylformamid und N-Methylpyrrolidon (2). Durchfluß und Rückhaltevermögen für eine Lösung des Farbstoffes der Formel (3) (1500 ppm) betragen 61 $l/m^2 \cdot h$ und 96%, während die gleichen Werte der Membran vor der Modifikation 94 $l/m^2 \cdot h$ und 50% sind. Der Arbeitsdruck beträgt 20 bar.

g) Beispiel f) wird wiederholt, wobei jedoch eine 20%ige Lösung von Toluol-2,4-diisocyanat in Dioxan verwendet wird.

Die so modifizierte Membran ist unlöslich in Dimethylformamid. Durchfluß und Rückhaltevermögen für eine Lösung des Farbstoffes der Formel (3) (1500 ppm) betragen 11 $l/m^2 \cdot h$ und 86% bei einem Druck von 20 bar.

Unmittelbar nach dem Gießen ist die Membran noch in Dimethylformamid löslich, wird aber nach dem ersten Modifikationsschritt bereits unlöslich. Dies zeigt die Vernetzung der Membran an, die dadurch verbesserte mechanische Stabilität bekommt und für RO- und UF-Verfahren geeignet ist.

Tabelle 14

| Verbindungen | Konzentration in % | Vor der Modifikation Durchfluß $l/m^2 \cdot h$ | Vor der Modifikation Rückhaltevermögen in % | Nach der Modifikation Durchfluß $l/m^2 \cdot h$ | Nach der Modifikation Rückhaltevermögen in % |
|---|---|---|---|---|---|
| NaCl | 1,0 | 146 | 8 | 82 | 18 |
| $CaCl_2$ | 1,0 | 150 | 17 | 79 | 53 |
| $NaSO_4$ | 1,0 | 210 | 33 | 75 | 60 |
| Toluolsolfonsäure | 1,0 | 200 | 4,2 | 64 | 68 |
| Zucker | 1,0 | 180 | 3,0 | — | — |
| Farbstoff der Formel (2) | 0,15 | 130 | 50 | 50 | 99,8 |
| Farbstoff der Formel (3) | 0,15 | 120 | 68 | 45 | 99,9 |
| Farbstoff der Formel (4) | 0,15 | 110 | 54 | 53 | 99,6 |
| Farbstoff der Formel (5) | 0,15 | 122 | 65 | 42 | 98,4 |
| (b) | | | | | |
| Farbstoff der Formel (2) | 0,15 | — | — | 60 | 99,6 |
| (c) | | | | | |
| Farbstoff der Formel (2) | 0,15 | — | — | 110 | 99,5 |
| (d) | | | | | |
| Farbstoff der Formel (2) | 0,15 | — | — | 160 | 99,0 |

Beispiel 24

Beispiel 23a) wird wiederholt, wobei jedoch ein Tripolymer aus Acrylnitril/Butadien/Methylmethacrylat (68—74%/6—7%/21—25%) verwendet wird.

Die Werte für Durchfluß und Rückhaltevermögen sind in Tabelle 15 angegeben.

Tabelle 15

| Verbindungen | Konzentration in % | Vor der Modifikation Durchfluß $l/m^2 \cdot h$ | Vor der Modifikation Rückhaltevermögen in % | Nach der Modifikation Durchfluß $l/m^2 \cdot h$ | Nach der Modifikation Rückhaltevermögen in % |
|---|---|---|---|---|---|
| NaCl | 1,0 | 250 | 4,0 | 43,6 | 23 |
| Farbstoff der Formel (2) | 1,5 | 190 | 28 | 22,2 | 97 |
| Farbstoff der Formel (2) | 0,15 | 250 | 30 | 35,0 | 97,6 |
| Farbstoff der Formel (3) | 1,5 | 183 | 36 | 34 | 99,7 |
| Farbstoff der Formel (5) | 1,5 | 172 | 45 | 31 | 99,6 |

Die so modifizierte Membran zeigte während 100 Stunden bei einem Betriebsdruck von 10 bar einen fast konstanten Durchfluß von etwa 30 $l/m^2 \cdot h$ [Farbstofflösung des Farbstoffes der Formel (2), 0,15%].

Beispiel 25

Beispiel 23a) wird wiederholt, wobei man jedoch keine Flachmembran, sondern eine Röhrenmembran (innerer Durchmesser 1,2 cm, Trägermaterial Non-wovens) mit einem Senkkörper (bob) mit einem Durchmesser von 1,1 cm gegossen wird. Der Senkkörper wird am unteren Ende der Röhre eingesetzt, die Röhre dann mit Gießlösung gefüllt, über den Senkkörper gezogen und dann direkt in Eiswasser behandelt. Die so beschichtete Röhre wird dann wie im Beispiel 23a) angegeben modifiziert. Man erhält eine Membran mit einem Durchfluß und Rückhaltevermögen für eine Lösung des Farbstoffes der Formel (2) (15 000 ppm) von 35 $l/m^2 \cdot h$ und 99,3% bei einem Druck von 15 bar.

Beispiel 26

Beispiel 23a) wird wiederholt, wobei die Umsetzungszeit mit Hydroxylamin variiert wird. In Tabelle 16 sind die erhaltenen Werte für die entsprechenden Membranen angegeben.

Tabelle 16

| Reaktionszeit (h) | Rückhaltevermögen in % | Durchfluß in $l/m^2 \cdot h$ | Druck (bar) | Verbindungen |
|---|---|---|---|---|
| 1,0 | 99,74 | 89 | 10 | Farbstoff der Formel (2)—0,15% |
| 2,0 | 99,90 | 105 | 10 | Farbstoff der Formel (2)—0,15% |
| 3,0 | 99,98 | 80 | 10 | Farbstoff der Formel (2)—0,15% |
| 3,0 | 10,4 | 120 | 10 | NaCl—1% |
| 3,0 | 16,1 | 169 | 20 | NaCl—1% |
| 3,0 | 19 | 228 | 30 | NaCl—1% |
| 3,0 | 16,3 | 340 | 40 | NaCl—1% |

Beispiel 27

Eine Membran aus einem Acrylnitril/Methallylsulfonat (Natriumsalz) (90 : 10)-Copolymer wird wie in Beispiel 23a) beschrieben hergestellt, wobei jedoch N-Methylpyrrolidon anstelle von Dimethylformamid als Lösungsmittel verwendet wird. Die sich auf einem Träger befindliche Membran hat einen Durchfluß und ein Rückhaltevermögen von 66 $l/m^2 \cdot h$ und 42% vor der Modifikation für eine Lösung des Farbstoffes der Formel (2) (1500 ppm) bei einem Druck von 10 bar; nach der Modifikation liegen die entsprechenden Werte bei 50 $l/m^2 \cdot h$ und 99,6%.

## Beispiel 28

a) 17,4 g eines Acrylnitril/Vinylacetat-Copolymers werden in 100 ml N-Methylpyrrolidon bei Raumtemperatur gelöst. Zu dieser Lösung gibt man 6 g Hydroxylaminhydrochlorid und 4,4 g Natriumcarbonat und erhitzt sie dann auf 75°C. Nach 3 Stunden bei dieser Temperatur wird auf Raumtemperatur abgekühlt und die Lösung dann durch einen Papierfilter filtriert.

10 g dieser Lösung werden auf 0 bis 5°C gekühlt und mit 300 mg Cyanurchlorid versetzt; die Lösung wird dann 30 Minuten bei dieser Temperatur gerührt. Zur Entfernung von Luftblasen bleibt die Lösung dann noch einige Zeit stehen, ehe sie mit einer Rakel (Abstand 0,2 mm) auf einen Polyester-Non-wovens-Träger gegossen wird. Die Membran wird anschließend eine Stunde lang in Wasser eingetaucht. Die weitere Modifikation erfolgt dann durch Umsetzung mit Polyäthylenimin (M.G. 30 000) (10%ige Lösung, pH-Wert 8,5, Raumtemperatur, 15 Minuten Reaktionszeit). Nach dem Spülen der Membran mit Wasser wird sie wie in Beispiel 23a) angefärbt. Die so modifizierte Membran ist in N-Methylpyrrolidon und Dimethylformamid unlöslich. Durchfluß und Rückhaltevermögen für eine Lösung des Farbstoffes der Formel (2) (1500 ppm) betragen 120 $l/m^2 \cdot h$ und 95% bei einem Druck von 10 bar. Die entsprechenden Werte für die nichtmodifizierte Membran lauten unter gleichen Bedingungen 400 $l/m^2 \cdot h$ und 57%.

b) Man verfährt wie in a), gibt jedoch eine 4%ige Lithiumnitratlösung zur Gießlösung. Die Gießlösung wird 60°C warm auf das Trägermaterial aufgegossen. Die Schichtdicke beträgt 0,1 mm. Anschließend taucht man die Membran sofort in Wasser ein, ehe man sie wie angegeben modifiziert. Durchfluß und Rückhaltevermögen der nichtmodifizierten Membran für eine Lösung des Farbstoffes der Formel (3) (1500 ppm) betragen 700 $l/m^2 \cdot h$ und 20% bei einem Druck von 10 bar. Die entsprechenden Werte für die modifizierte Membran lauten 56 $l/m^2 \cdot h$ und 98%.

## Beispiel 29

Beispiel 28a) wird wiederholt, mit dem Unterschied, daß die gegossene Membran nicht in Wasser, sondern in eine 10%ige Lösung von Polyäthylenimin (M.G. 30 000) bei Raumtemperatur eingetragen wird und 15 Minuten in dieser Lösung belassen wird.

Die so erhaltene Membran wird dann wie in Beispiel 23a) beschrieben eingefärbt. Sie ist in N-Methylpyrrolidon unlöslich. Durchfluß und Rückhaltevermögen für eine Lösung des Farbstoffes der Formel (2) (2500 ppm) betragen 100 $l/m^2 \cdot h$ und 98% bei einem Druck von 10 bar.

## Beispiel 30

Beispiel 29 wird wiederholt, wobei jedoch nur 150 mg (anstelle von 300 mg) Cyanurchlorid verwendet werden.

Die so erhaltene Membran zeigt einen Durchfluß und ein Rückhaltevermögen für eine Lösung des Farbstoffes der Formel (2) (1500 ppm) von 100 $l/m^2 \cdot h$ und 98% bei einem Druck von 10 bar.

## Beispiel 31

Eine 23%ige Lösung eines Terpolymers aus Acrylnitril/Butadien/Methylmethacrylat (68—74%/7—7%/21—25%) in Dimethylacetamid wird durch ein Papierfilter filtriert, auf einen Träger gegossen und dann wie in Beispiel 20a) beschrieben modifiziert. Vor der Modifikation betragen die Werte für den Durchfluß und das Rückhaltevermögen für eine Lösung des Farbstoffes der Formel (3) (1500 ppm) 190 $l/m^2 \cdot h$ und 50% bei einem Druck von 10 bar; nach der Modifikation lauten die entsprechenden Werte 10 $l/m^2 \cdot h$ und 98,6%.

## Beispiel 32

Polyacrylnitril (Homopolymer) (synthetisiert durch Emulsionspolymerisation nach W. R. Sorensen und T. W. Campbell, Preparation Methods of Polymer Chemistry, 2. Auflage, Interscience Publishers, Seite 236, 1968) wird in Dimethylformamid gelöst und filtriert. Zum Gießen der Membran verwendet man eine 10%ige Lösung und verfährt wie in Beispiel 20a). Durchfluß und Rückhaltevermögen dieser Membran betragen vor der Modifikation für eine Lösung des Farbstoffes der Formel (3) (1500 ppm)

271 $l/m^2 \cdot h$ und 75% bei einem Druck von 10 bar; nach der Modifikation erhält man als entsprechende Werte 120 $l/m^2 \cdot h$ und 95%.

## Beispiel 33

Man verfährt wie in Beispiel 20a), verwendet jedoch als Lösungsmittel für die Gießlösung N-Methylpyrrolidon anstelle von Dimethylformamid, ferner wird die Membran in Eiswasser eingetaucht (und nicht in Wasser von Raumtemperatur).

Die durchschnittliche Porengröße der Membran beträgt 18 Å, der Durchfluß und das Rückhaltevermögen für eine Lösung des Farbstoffes der Formel (3) (1500 ppm) betragen 120 $l/m^2 \cdot h$ und 85% bei einem Druck von 10 bar.

Die Membran wird dann wie in Beispiel 11 angegeben modifiziert, wobei jedoch die folgenden Unterschiede gelten: Die Reaktion mit Hydroxylamin wird bei 50°C während 10 Minuten durchgeführt, Polyäthylenimin wird durch Polyvinylamin ersetzt (M.G. 50 000 bis 160 000, 10%ige wäßrige Lösung, pH-Wert 9 bis 11). Die Membran wird 15 Minuten bei Raumtemperatur in dieser Lösung behandelt. Die anschließende Anfärbung erfolgt wie in Beispiel 1. Die so erhaltene Membran zeigt einen Durchfluß und ein Rückhaltevermögen für die angegebene Lösung des Farbstoffes der Formel (3) von 112 $l/m^2 \cdot h$ und 97%.

## Beispiel 34

Beispiel 33 wird wiederholt, wobei jedoch die folgenden Änderungen gelten: Anstelle von Polyamin wird ein Polyvinyl/Vinylsulfonat(Natriumsalz)(60 : 40)-Copolymer (M.G. 20 000 bis 80 000) verwendet. Die Membran wird mit einer 10%igen wäßrigen Lösung umgesetzt, nachdem sie vorher mit Cyanurchlorid während 2 Stunden bei Raumtemperatur (pH-Wert 9 bis 10) umgesetzt worden ist.

Der Anfärbeschritt (a) ist in diesem Fall nicht nötig, da das Polymer bereits ionische Sulfogruppen enthält.

Die so erhaltene Membran zeigt einen Durchfluß und ein Rückhaltevermögen für eine Lösung des Farbstoffes der Formel (3) (1500 ppm) von 102 $l/m^2 \cdot h$ und 97% bei einem Druck von 10 bar.

## Beispiel 35

Ein höheres Rückhaltevermögen für dieselben gelösten Stoffe kann erreicht werden, wenn man Membranen gemäß Beispiel 1 herstellt, wobei man jedoch die Reaktionstemperaturen und -zeiten ändert, die Konzentrationen der Komponenten aber unverändert läßt; die Reaktion mit Hydroxylamin wird bei 71°C während 15 Minuten, die Reaktion mit Cyanurchlorid bei 0°C während 5 Minuten, die Reaktion mit Polyäthylenimin während 5 Minuten und der Anfärbeschritt (a) unter unveränderten Bedingungen durchgeführt. Durch diese Reaktionsfolge kann man z. B. eine nichtmodifizierte Membran mit einer Durchlässigkeit bis zu einem Molekulargewicht von 70 000 so verändern, daß Moleküle bis zu einem Molekulargewicht von etwa 250 zurückgehalten werden (vgl. Tabelle 17, 4-Nitrotoluol-2-sulfonsäure, M.G. 216, wird zu 94,5% zurückgehalten, während die gleiche Membran vor der Modifikation nur 9,8% der Verbindung zurückhielt; Testbedingungen: Raumtemperatur und 20 bar Druck).

Tabelle 17

| Verbindungen | Konzentration in % | Vor der Modifikation Durchfluß $l/m^2 \cdot h$ | Vor der Modifikation Rückhaltevermögen in % | Nach der Modifikation Durchfluß $l/m^2 \cdot h$ | Nach der Modifikation Rückhaltevermögen in % |
|---|---|---|---|---|---|
| NaCl | 1,0 | 284 | 2,17 | 50 | 39 |
| $CaCl_2$ | 1,0 | 192 | 4,4 | 36 | 76 |
| NaSO | 1,0 | 224 | 32 | 40 | 84 |
| Natriumdodecylsulfat | 1,0 | 139 | 71 | 26 | 92 |
| 4-Nitrotoluol-2-sulfonsäure | 1,0 | 373 | 9,8 | 28,2 | 94,2 |

Beispiel 36

a) 10 g eines Acrylnitril/Vinylacetat(93 : 7)-Copolymers werden in 75 g N-Methylpyrrolidon gelöst. Zu dieser Lösung gibt man dann 15 g Hydroxylamin-Hydrochlorid und 12 g Natriumcarbonat. Unter Rühren wird diese Mischung 4 Stunden auf 75°C erhitzt, dann filtriert und wie in Beispiel 23a) auf ein Non-wovens-Trägermaterial gegossen. Unmittelbar nach dem Gießen der Membran wird diese in Eiswasser eingetaucht und 4 Stunden dort belassen. Durchfluß und Rückhaltevermögen dieser Membran betragen für eine Lösung des Farbstoffes der Formel (3) (1500 ppm) 87 l/m²·h und 30% bei einem Druck von 10 bar. Nach weiterer Modifikation dieser Membran [wie in Beispiel 23a)] steigt das Rückhaltevermögen auf 94% bei einem Durchfluß von 80 l/m²·h unter den gleichen Testbedingungen.

b) Man verfährt wie in a), verwendet jedoch eine 10%ige Polyvinylanilinlösung (M.G. 20 000) (anstelle von Polyäthylenimin). Die Reaktionszeit beträgt 1 Stunde bei Raumtemperatur, der pH-Wert ist 10. Durchfluß und Rückhaltevermögen für eine Lösung des Farbstoffes der Formel (3) (1500 ppm) betragen 64 l/m²·h und 86% bei einem Druck von 10 bar.

Die nichtmodifizierte Membran zeigt für Durchfluß und Rückhaltevermögen die gleichen Werte wie in a) angegeben.

c) Man verfährt wie in b) angegeben, verwendet jedoch ein Vinylanilin/Styrolsulfonat (Natriumsalz)(40 : 60)-Copolymer mit einem Molekulargewicht von etwa 100 000 anstelle von Polyvinylanilin. Durchfluß und Rückhaltevermögen für eine Lösung des Farbstoffes der Formel (3) (1500 ppm) betragen 30 l/m²·h und 84% bei einem Druck von 10 bar.

**Patentansprüche**

1. Verfahren zur Herstellung einer porösen, semipermeablen, durch Amidoximgruppen modifizierten Membran aus Polyacrylnitrilen oder Copolymeren aus Acrylnitril und anderen äthylenisch ungesättigten Monomeren, dadurch gekennzeichnet, daß man eine Membran verwendet, die vor der Modifikation an der Oberfläche Poren mit einem Durchmesser von 10 bis 1000 Å (1 bis 100 nm) aufweist, und daß man die Amidoximgruppen mit einer Verbindung (C) umsetzt, die mindestens eine ionisierbare Gruppe aufweist.

2. Verfahren zur Herstellung einer porösen, semipermeablen, durch Amidoximgruppen modifizierten Membran aus Polyacrylnitrilen oder Copolymeren aus Acrylnitril und anderen äthylenisch ungesättigten Monomeren, dadurch gekennzeichnet, daß man

(I) Polyacrylnitrile oder Copolymere aus Acrylnitril und anderen äthylenisch ungesättigten Monomeren mit Hydroxylamin umsetzt, mit diesem Umsetzungsprodukt eine Membran gießt, die erhaltene Membran in Wasser eintaucht und sie dann mit
   (a) einer organischen Verbindung (A) umsetzt, welche mindestens zwei reaktionsfähige Gruppen, davon mindestens eine mit den Amidoximgruppen reaktionsfähige Gruppe aufweist, wobei so verfahren wird, daß das erhaltene Umsetzungsprodukt aus der Amidoximgruppen enthaltenden Membran und der Komponente (A) mindestens noch eine reaktionsfähige Gruppe enthält, dieses
   (b) gegebenenfalls mit mindestens einem polyfunktionellen Oligomer oder Polymer (B) und dann
   (c) mit einer Verbindung (C) umsetzt, die mindestens eine ionisierbare Gruppe und — sofern die Komponente (B) vorhanden — mindestens eine mit der Komponente (B) reaktionsfähige Gruppe aufweist, sofern die Komponente (B) nicht bereits selbst genügend ionisierbare Gruppen enthält, oder daß man

(II) Polyacrylnitrile oder Copolymere aus Acrylnitril und anderen äthylenisch ungesättigten Monomeren mit Hydroxylamin und
   (a) einer organischen Verbindung (A) umsetzt, welche mindestens zwei reaktionsfähige Gruppen, davon mindestens eine mit den Amidoximgruppen reaktionsfähige Gruppe aufweist, wobei so verfahren wird, daß das erhaltene Umsetzungsprodukt aus der Amidoximgruppen enthaltenden Membran und der Komponente (A) mindestens noch eine reaktionsfähige Gruppe enthält, mit diesem Umsetzungsprodukt eine Membran gießt, die erhaltene Membran in Wasser eintaucht, sie dann
   (b) gegebenenfalls mit mindestens einem polyfunktionellen Oligomer oder Polymer (B) und dann
   (c) mit einer Verbindung (C) umsetzt, die mindestens eine ionisierbare Gruppe und — sofern die Komponente (B) vorhanden — mindestens eine mit der Komponente (B) reaktionsfähige Gruppen aufweist, sofern die Komponente (B) nicht bereits selbst genügend ionisierbare Gruppen aufweist.

3. Verfahren nach Anspruch 2, dadurch gekennzeichnet, daß die Bildung der Membran durch Aufgießen des Polymers aus einer organischen Lösung auf ein poröses Trägermaterial und anschließende Behandlung mit Wasser erfolgt.

4. Verfahren zur Herstellung einer porösen, semipermeablen, durch Amidoximgruppen modifizierten Membran aus Polyacrylnitrilen oder Copolymeren aus Acrylnitril und anderen äthylenisch ungesättigten Monomeren, dadurch gekennzeichnet, daß man eine Membran verwendet, die vor der Modifikation an der Oberfläche Poren mit einem Durchmesser von 10 bis 1000 Å (1 bis 100 nm) aufweist, und daß man

(a) die Amidoximgruppen der Membran mit einer organischen Verbindung (A) umsetzt, welche mindestens 2 reaktionsfähige Gruppen, davon mindestens eine mit den Amidoximgruppen reaktionsfähige Gruppe aufweist, wobei so verfahren wird, daß das erhaltene Umsetzungsprodukt aus der Amidoximgruppen enthaltenden Membran und der Komponente (A) mindestens noch eine reaktionsfähige Gruppe enthält, dieses Umsetzungsprodukt dann
(b) gegebenenfalls mit mindestens einem polyfunktionellen Oligomer oder Polymer (B) und dann
(c) mit einer Verbindung (C) umsetzt, die mindestens eine ionisierbare Gruppe und — sofern die Komponente (B) vorhanden — mindestens eine mit der Komponente (B) reaktionsfähige Gruppe aufweist, sofern die Komponente (B) nicht bereits selbst genügend ionisierbare Gruppen aufweist.

5. Verfahren nach Anspruch 4, dadurch gekennzeichnet, daß man als Komponente (C) eine farblose oder vorzugsweise farbige Verbindung verwendet.

6. Verfahren nach Anspruch 5, dadurch gekennzeichnet, daß die Komponente (C) ein reaktiver Azofarbstoff ist, der Sulfonsäure-, Carbonsäure- oder Ammoniumgruppen aufweist.

7. Verfahren nach einem der Ansprüche 1 bis 6, dadurch gekennzeichnet, daß man Flach- oder Röhrenmembranen herstellt.

8. Poröse, semipermeable, durch Amidoximgruppen modifizierte Membran aus Polyacrylnitrilen oder Copolymeren aus Acrylnitril und anderen äthylenisch ungesättigten Monomeren, dadurch gekennzeichnet, daß sie vor der Modifikation an der Oberfläche Poren mit einem Durchmesser von 10 bis 1000 Å (1 bis 100 nm) aufweist und an die Amidoximgruppen über

(a) mindestens ein Brückenglied, abgeleitet von einer organischen Verbindung (A), die mindestens zwei funktionelle Gruppen aufweist,
(b) gegebenenfalls mindestens ein polyfunktionelles lineares oder verzweigtes Oligomer oder Polymer (B) gebunden ist, und
(c) das Brückenglied oder das Oligomer/Polymer (B) — sofern vorhanden — mit ionisierbare Gruppen enthaltenden Resten substituiert ist.

9. Membran nach Anspruch 8, dadurch gekennzeichnet, daß der Anteil der Acrylnitrileinheiten in den Copolymeren mindestens 5 und vorzugsweise mindestens 20 Gew.-% beträgt.

10. Membran nach Anspruch 9, dadurch gekennzeichnet, daß sie Copolymere aus Acrylnitril und Vinylacetat, Vinyläthern, Vinylpyridin, Vinylchlorid, Styrol, Butadien, (Meth)acrylsäure oder (Meth)acrylaten, Maleinsäureanhydrid oder 2-Aminoäthylmethacrylat oder Allylverbindungen oder Ter- oder Tetrapolymeren auf Acrylnitrilbasis oder deren Mischungen enthält.

11. Membran nach Anspruch 8, dadurch gekennzeichnet, daß das Brückenglied sich von organischen Verbindungen (A), die als reaktive Gruppen Doppelbindungen oder Epoxyd-, Aziridin-, Aldehyd-, Imidat-, Isocyanat-, Isothiocyanat-, Hydroxyl-, Anhydrid-, Säurehalogenid- oder N-Methylolgruppen enthalten oder von Verbindungen ableitet, die tertiäre Amine oder Anionen als abspaltbare Gruppen enthalten.

12. Membran nach Anspruch 8, dadurch gekennzeichnet, daß die polyfunktionelle Komponente (B) aliphatische oder aromatische Amino-, Hydroxyl- oder Thiolgruppen enthält.

13. Membran nach Anspruch 12, dadurch gekennzeichnet, daß die Komponente (B) ein Polyäthylenimin, Polyvinylalkohol, Cellulosederivat, Polyvinylamin oder Polyvinylanilin ist.

14. Membran nach Anspruch 12, dadurch gekennzeichnet, daß die Komponente (B) ein Copolymer aus Styrolsulfonat(Natriumsalz)/Vinylanilin, 2-Aminoäthylmethacrylat/Acrylsäure, Vinylanilin/Vinylbenzyltrimethylammoniumchlorid oder ein Poly-(Vinylamin/Vinylsulfonat) ist.

15. Membran nach Anspruch 8, dadurch gekennzeichnet, daß sie als ionisierbare Gruppe in den Resten gemäß (c) Sulfonsäure- oder Carboxylgruppen oder Ammoniumgruppen enthält.

16. Membran nach Anspruch 15, dadurch gekennzeichnet, daß sie als Reste gemäß (c) solche von reaktiven Azofarbstoffen mit ionisierbaren Gruppen enthält.

17. Verwendung der Membranen nach einem der Ansprüche 8 bis 16 zur Trennung einwertiger Ionen niedrigen Ionengewichtes von vorzugsweise mehrwertigen Ionen mit niedrigem oder höherem Ionengewicht oder von einwertigen Ionen mit höherem Ionengewicht.

18. Verwendung der Membran nach einem der Ansprüche 8 bis 16 zur Trennung von ionogonen Substanzen von nichtionogenen Substanzen.

19. Verfahren zum Trennen von Substanzen, dadurch gekennzeichnet, daß man wäßrige Lösungen von Substanzmischungen durch eine Membran nach einem der Ansprüche 8 bis 16 fließen läßt.

20. Verfahren zur Konzentrierung und/oder Reinigung von Flüssigkeiten (Lösungen) oder zur Trennung von gelösten Komponenten, dadurch gekennzeichnet, daß man die Flüssigkeiten (Lösungen) auf

eine Seite einer Membran gemäß der Ansprüche 8 bis 16 vorlegt und die Lösungen unter Anwendung eines hydraulischen Drucks, der größer als der osmotische Druck der Lösungen ist, filtriert.

**Claims**

1. Process for the manufacture of a porous semipermeable membrane of polyacrylonitriles or copolymers of acrylonitrile and other ethylenically unsaturated monomers, said membrane being modified by amidoxime groups, which process comprises reacting a membrane, having at the surface pores with a diameter of 1 to 100 nm prior to modification, with a compound (C) containing at least one ionisable group.

2. Process for the manufacture of a porous semipermeable membrane of polyacrylonitriles or copolymers of acrylonitrile and other ethylenically unsaturated monomers, said membrane being modified by amidoxime groups, which process comprises

(I) reacting polyacrylonitriles or copolymers of acrylonitrile and other ethylenically unsaturated monomers with hydroxylamine, casting a membrane with this reaction product, treating the membrane in water,
  (a) reacting the membrane with an organic compound (A) containing at least two functional groups at least one of which is capable of reaction with amidoxime groups, with the proviso that the reaction product of the amidoxime groups containing membrane and compound (A) contains at least one reactive group,
  (b) optionally reacting said product with at least one polyfunctional oligomer or polymer (B), and then with
  (c) a compound (C), containing at least one ionisable group and — if component (B) is present — at least one group capable of reaction with component (B), with the proviso that component (B) itself does not contain already sufficient ionisable groups, or
(II) reacting polyacrylonitriles or copolymers of acrylonitrile and other ethylenically unsaturated monomers with hydroxylamine and
  (a) an organic compound (A) containing at least two functional groups at least one of which is capable of reaction with amidoxime groups, with the proviso that the reaction product of the amidoxime groups containing membrane and compound (A) contains at least one reactive group, casting a membrane with this reaction product, treating the membrane in water,
  (b) optionally reacting it with at least one polyfunctional oligomer or polymer (B), and then with
  (c) a compound (C), containing at least one ionisable group and — if component (B) is present — at least one group capable of reaction with component (B), with the proviso that component (B) itself does not contain already sufficient ionisable groups.

3. Process according to claim 2, wherein the forming of the membrane is carried out through casting an organic solution of the polymer on a porous support followed by a treatment in water.

4. Process for the manufacture of a porous semipermeable membrane of polyacrylonitriles or copolymers of acrylonitrile and other ethylenically unsaturated monomers, said membrane being modified by amidoxime groups, which process comprises reacting the amidoxime groups of the membrane, having at the surface pores with a diameter of 10 to 1000 Å (1 to 100 nm) prior to modification, with

(a) an organic compound (A) containing at least two functional groups at least one of which is capable of reaction with amidoxime groups, wiht the proviso that the reaction product of the amidoxime groups containing membrane and compound (A) contains at least one reactive group,
(b) optionally reacting said reaction product with at least one polyfunctional oligomer or polymer, and then with
(c) a compound (C), containing at least one ionisable group and — if component (B) is present — at least one group capable of reaction with component (B), with the proviso that component (B) itself does not contain already sufficient ionisable groups.

5. A process according to claim 4, wherein component (C) is a colourless or preferably coloured compound.

6. A process according to claim 5, wherein component (C) is a reactive azo dye containing sulfonic acid groups, carboxylic acid groups or ammonium groups.

7. A process according to any one of claims 1 to 6, wherein flat or tubular membranes are prepared.

8. A porous semipermeable membrane of polyacrylonitriles or copolymers of acrylonitrile and other ethylenically unsaturated monomers, said membrane, having at the surface pores with a diameter of 10 to 1000 Å (1 to 100 nm) prior to modification, being modified by amidoxime groups to which via

(a) at least one bridge member, derived from an organic compound (A) containing at least two functional groups,
(b) optionally at least one polyfunctional linear or branched oligomer or polymer (B) is bonded, and
(c) the bridge member or the oligomer/polymer (B) — if this is present -- being substituted by radicals containing ionisable groups.

9. A membrane according to claim 8, wherein the proportion of acrylonitrile units in the copolymers is at least 5 and preferably at least 20% by weight.

10. A membrane according to claim 9 containing copolymers of acrylonitrile and vinyl acetate, vinyl ethers, vinyl pyridine, vinyl chloride, styrene, butadiene, (meth)acrylic acid or (meth)acrylates, maleic anhydride, 2-aminoethyl methacrylate or allyl compounds, or terpolymers or tetrapolymers based on acrylonitrile, or mixtures thereof.

11. A membrane according to claim 8, wherein the bridge member is derived from organic compounds (A) that contain as reactive groups multiple bonds or epoxide, aziridine, aldehyde, imidate, isocyanate, isothiocyanate, hydroxyl, anhydride, acyl halide or N-methylol groups, or is derived from compounds containing substituents detachable as tertiary amines or as anions.

12. A membrane according to claim 8, wherein the polyfunctional component (B) contains aliphatic or aromatic amino groups, hydroxyl groups or thiol groups.

13. A membrane according to claim 12, wherein component (B) comprises polyethyleneimines, polyvinyl alcohol, cellulose derivatives, polyvinylamines or polyvinylanilines.

14. A membrane according to claim 12, wherein component (B) comprises copolymers of styrenesulfonate (sodium salt)/vinylaniline, 2-aminoethyl methacrylate/acrylic acid, vinylaniline/vinylbenzyltrimethylammonium chloride or of poly(vinylamine/vinyl sulfonate).

15. A membrane according to claim 8, which comprises sulfonic acid groups, carboxylic acid groups or ammonium groups as ionisable groups in the radicals of (c).

16. A membrane according to claim 15, which contains radicals of reactive azo dyes with ionisable groups as the radicals of (c).

17. Use of the membranes according to any one of claims 8 to 16 separating monovalent ions of low ionic weight from preferably polyvalent ions of low or higher ionic weight or from monovalent ions of high ionic weight.

18. Use of the membranes according to any one of claims 8 to 16 separating ionic substances from non-ionic substances.

19. A process for separating substances which comprises allowing aqueous solutions of mixtures of substances to flow through a membrane according to any one of claims 8 to 16.

20. Process for concentrating and/or purifying of liquids (solutions) or separating of dissolved components which comprises disposing the liquids (solutions) on one side of a membrane according to any one of claims 8 to 16 and filtering them by applying hydraulic pressure greater than the osmotic pressure of the solutions.

**Revendications**

1. Procédé de fabrication d'une membrane poreuse semi-perméable modifiée par des radicaux amidoxime à base de polyacrylonitriles ou de copolymères d'acrylonitrile et d'autres monomères éthyléniquement insaturés, caractérisé en ce qu'on utilise une membrane qui présente, avant la modification, à la surface, des pores d'un diamètre de 10 à 1000 Å (1 à 100 nm) et on fait réagir les radicaux amidoxime avec un composé (C) qui comprend au moins un radical ionisable.

2. Procédé de fabrication d'une membrane poreuse semi-perméable modifiée par des radicaux amidoxime à base de polyacrylonitriles ou de copolymères d'acrylonitrile et d'autres monomères éthyléniquement insaturés, caractérisé en ce que:

(I) on fait réagir des polyacrylonitriles ou des copolymères d'acrylonitrile et d'autres monomères éthyléniquement insaturés avec de l'hydroxylamine, on coule une membrane au moyen de ce produit de réaction, on immerge la membrane obtenue dans de l'eau et ensuite
  (a) on la fait réagir avec un composé organique (A) qui comprend au moins deux radicaux réactifs dont au moins un est réactif avec les radicaux amidoxime, en procédant de façon que le produit de réaction obtenu à partir de la membrane comprenant des radicaux amidoxime et le composant (A) comprenne au moins encore un radical réactif,
  (b) on fait réagir celui-ci éventuellement avec au moins un oligomère ou polymère (B) polyfonctionnel et
  (c) ensuite avec un composé (C) qui comprend au moins un radical ionisable et, si le composant (B) est présent, au moins un radical réactif avec le composant (B), pour autant que le composant (B) ne contienne pas déjà lui-même suffisamment de radicaux ionisables, ou bien

(II) on fait réagir des polyacrylonitriles ou des copolymères d'acrylonitrile et d'autres monomères éthyléniquement insaturés avec de l'hydroxylamine et
  (a) un composé organique (A) qui comprend au moins deux radicaux réactifs dont au moins un est réactif avec les radicaux amidoxime, en procédant de façon que le produit de réaction obtenu à partir de la membrane contenant des radicaux amidoxime et du composant (A) comprenne encore au moins un radical réactif, on coule une membrane au moyen de ce produit de réaction, on immerge cette membrane dans l'eau et ensuite
  (b) on la fait réagir éventuellement avec au moins un oligomère ou polymère polyfonctionnel (B) et ensuite
  (c) avec un composé (C) qui comprend au moins un radical ionisable et, si le composant (B) est présent, au moins un radical réactif avec le composant (B), pour autant que le composant (B) ne comprenne déjà pas par lui-même suffisamment de radicaux ionisables.

3. Procédé suivant la revendication 2, caractérisé en ce que la formation de la membrane est effectuée par coulée du polymère à partir d'une solution organique sur une matière de support poreuse et par traitement consécutif au moyen d'eau.

4. Procédé de fabrication d'une membrane poreuse semi-perméable modifiée par des radicaux amidoxime à base de polyacrylonitriles ou de copolymères d'acrylonitrile et d'autres monomères éthyléniquement insaturés, caractérisé en ce qu'on utilise une membrane qui présente, avant la modification, à la surface, des pores d'un diamètre de 10 à 1000 Å (1 à 100 nm) et puis

(a) on fait réagir les radicaux amidoxime de la membrane avec un composé organique (A) qui comprend au moins 2 radicaux réactifs dont au moins un est réactif avec les radicaux amidoxime en procédant de manière que le produit de réaction obtenu à partir de la membrane contenant des radicaux amidoxime et du composant (A) comprenne au moins encore un radical réactif, puis
(b) on fait réagir ce produit de réaction éventuellement avec au moins un oligomère ou polymère polyfonctionnel (B) et ensuite
(c) avec un composé (C) qui comprend au moins un radical ionisable et, si le composant (B) est présent, au moins un radical réactif avec le composant (B), pour autant que le composant (B) ne comprenne pas déjà par lui-même suffisamment de radicaux ionisables.

5. Procédé suivant la revendication 4, caractérisé en ce qu'on utilise comme composant (C), un composé incolore ou de préférence coloré.

6. Procédé suivant la revendication 5, caractérisé en ce que le composant (C) est un colorant azoïque réactif qui comprend des radicaux acide sulfonique, acide carboxylique ou ammonium.

7. Procédé suivant l'une des revendications 1 à 6, caractérisé en ce qu'on produit des membranes plates ou tubulaires.

8. Membrane poreuse semi-perméable modifiée par des radicaux amidoxime à base de polyacrylonitriles ou de copolymères d'acrylonitrile et d'autres monomères éthyléniquement insaturés, caractérisée en ce qu'elle présente, avant la modification, à la surface, des pores d'un diamètre de 10 à 1000 Å (1 à 100 nm) et au niveau des radicaux amidoxime, est uni

(a) par au moins un élément de pontage issu d'un composé organique (A) qui comprend au moins deux radicaux fonctionnels,
(b) éventuellement au moins un oligomère ou polygomère polyfonctionnel linéaire ou ramifié (B) et
(c) l'élément de pontage ou l'oligomère/polymère (B), s'il est présent, est substitué par des restes contenant des radicaux ionisables.

9. Membrane suivant la revendication 8, caractérisée en ce que la proportion des unités d'acrylonitrile dans le copolymère est d'au moins 5 et de préférence d'au moins 20% en poids.

10. Membrane suivant la revendication 9, caractérisée en ce qu'elle contient des copolymères d'acrylonitrile et d'acétate de vinyle, d'éthers vinyliques, de vinylpyridine, de chlorure de vinyle, de styrène, de butadiène, d'acide (méth)acrylique ou de (méth)acrylates, d'anhydride maléique ou de méthacrylate de 2-aminoéthyle ou des composés allyliques ou bien des ter- ou tétrapolymères à base d'acrylonitrile, ou bien leurs mélanges.

11. Membrane suivant la revendication 8, caractérisée en ce que l'élément de pontage est issu de composés organiques (A) contenant comme radicaux réactifs des doubles liaisons ou des radicaux époxyde, aziridine, aldéhyde, imidate, isocyanate, isothiocyanate, hydroxyle, anhydride, halogénure d'acide ou N-méthylol ou bien de composés qui contiennent des amines tertiaires ou anions comme radicaux éliminables.

12. Membrane suivant la revendication 8, caractérisée en ce que le composant polyfonctionnel (B) comprend des radicaux amino aliphatiques ou aromatiques, hydroxyle ou thiol.

13. Membrane suivant la revendication 12, caractérisée en ce que le composant (B) est une polyéthylèneimine, un alcool polyvinylique, un dérivé cellulosique, une polyvinylamine ou une polyvinylaniline.

14. Membrane suivant la revendication 12, caractérisée en ce que le composant (B) est un copolymère de styrènesulfonate(sel de sodium)/vinylaniline, de méthacrylate de 2-aminoéthyle/acide acrylique, de vinylaniline/chlorure de vinylbenzyltriméthylammonium ou un poly(vinylamine/sulfonate de vinyle).

15. Membrane suivant la revendication 8, caractérisée en ce qu'elle contient comme radicaux ionisables dans les restes suivant (c) des radicaux acide sulfonique ou acide carboxylique ou des radicaux ammonium.

16. Membrane suivant la revendication 15, caractérisée en ce qu'elle contient comme restes suivant (C) des restes de colorants azoïques réactifs contenant des radicaux ionisables.

17. Utilisation des membranes suivant l'une des revendications 8 à 16 pour la séparation d'ions monovalents de bas poids ionique hors d'ions de préférence polyvalents de poids ionique faible ou élevé ou hors d'ions monovalents de poids ionique élevé.

18. Utilisation des membranes suivant l'une des revendications 8 à 16 pour la séparation de substances ioniques hors de substances non ioniques.

19. Procédé de séparation de substances, caractérisée en ce qu'on fait s'écouler des solutions aqueuses de mélanges de substances à travers une membrane suivant l'une des revendications 8 à 16.

20. Procédé de concentration et/ou d'épuration de liquides (solutions) ou de séparation de composants dissous, caractérisé en ce qu'on amène les liquides (solutions) sur une face d'une membrane suivant les revendications 8 à 16 et on filtre les solutions en utilisant une pression hydraulique qui est supérieure à la pression osmotique des solutions.